# EUROPEAN PATENT SPECIFICATION

(11) **EP 2 441 783 B1**
(45) Date of publication and mention of the grant of the patent: **04.03.2015**
(21) Application number: 11182496.7
(22) Date of filing: 23.09.2011
(51) Int. Cl.: C08F 265/04, B41C 1/10

(54) **Lithographic printing plate precursor and lithographic printing method**
Lithographiedruckplattenvorläufer und Lithographiedruckverfahren
Précurseur de plaque d'impression lithographique et procédé d'impression lithographique

(30) Priority: 24.09.2010 JP 2010214562
(43) Date of publication of application: 18.04.2012
(73) Proprietor: FUJIFILM Corporation, Tokyo 106-0031 (JP)
(72) Inventor: Kanehisa, Mayuko, Shiuoka (JP); Oohashi, Hidekazu, Shiuoka (JP); Mori, Takanori, Shiuoka (JP)
(74) Representative: Hoffmann Eitle

(56) References cited:
- US-A- 3 830 878
- US-A- 4 041 108

## Description

### FIELD OF THE INVENTION

The present invention relates to a polymerizable composition and a lithographic printing plate precursor including the same. In particular, it relates to a polymerizable composition suitably used in a lithographic printing plate precursor which is capable of undergoing a so-called direct plate making, in which the plate making is directly conducted based on digital signals, for example, from a computer using various kinds of lasers and a lithographic printing plate precursor including the same, and a lithographic printing method.

### BACKGROUND OF THE INVENTION

In general, a lithographic printing plate is composed of an oleophilic image area accepting ink and a hydrophilic non-image area accepting dampening water in the process of printing. Lithographic printing is a printing method utilizing the nature of water and oily ink to repel with each other and comprising rendering the oleophilic image area of the lithographic printing plate to an ink-receptive area and the hydrophilic non-image area thereof to a dampening water-receptive area (ink-unreceptive area), thereby making a difference in adherence of the ink on the surface of the lithographic printing plate, depositing the ink only to the image area, and then transferring the ink to a printing material, for example, paper.

In order to produce the lithographic printing plate, a lithographic printing plate precursor (PS plate) comprising a hydrophilic support having provided thereon an oleophilic photosensitive resin layer (image-recording layer) is used. Specifically, the PS plate is exposed through a mask, for example, a lith film, and then subjected to development processing, for example, with an alkaline developer to remove the unnecessary image-recording layer corresponding to the non-image area by dissolving while leaving the image-recording layer corresponding to the image area, thereby obtaining the lithographic printing plate.

Due to the recent progress in the technical field, nowadays the lithographic printing plate can be obtained by a CTP (computer-to-plate) technology. Specifically, a lithographic printing plate precursor is directly subjected to scanning exposure using laser or laser diode without using a lith film and developed to obtain a lithographic printing plate.

With the progress described above, the issue on the lithographic printing plate precursor has transferred to improvements, for example, in image-forming property corresponding to the CTP technology, printing property or physical property. Also, with the increasing concern about global environment, as another issue on the lithographic printing plate precursor, an environmental problem on waste liquid discharged accompanying the wet treatment, for example, development processing comes to the front.

In response to the environmental problem, simplification of development or plate making or non-processing has been pursued. As one method of simple plate making, a method referred to as an "on-press development" is practiced. Specifically, according to the method after exposure of a lithographic printing plate precursor, the lithographic printing plate precursor is mounted as it is on a printing machine without conducting conventional development and removal of the unnecessary area of image-recording layer is performed at an early stage of printing step.

Also, as a method of simple development, a method referred to as a "gum development" is practiced wherein the removal of the unnecessary area of image-recording layer is performed using not a conventional high alkaline developer but a finisher or gum solution of near-neutral pH.

In the simplification of plate making operation as described above, a system using a lithographic printing plate precursor capable of being handled in a bright room or under a yellow lump and a light source is preferable from the standpoint of workability. Thus, as the light source, a semiconductor laser emitting an infrared ray having a wavelength of 760 to 1,200 or a solid laser, for example, YAG laser, is used. An UV laser is also used.

As the lithographic printing plate precursor capable of undergoing on-press development, for instance, a lithographic printing plate precursor having provided on a hydrophilic support, an image-recording layer (heat-sensitive layer) containing microcapsules having a polymerizable compound encapsulated therein is described in JP-A-2001-277740 (the term "JP-A" as used herein means an "unexamined published Japanese patent application") and JP-A-2001-277742. A lithographic printing plate precursor having provided on a support, an image-recording layer (photosensitive layer) containing an infrared absorbing agent, a radical polymerization initiator and a polymerizable compound is described in JP-A-2002-287334. A lithographic printing plate precursor capable of undergoing on-press development having provided on a support, an image-recording layer containing a polymerizable compound and a graft polymer having a polyethylene oxide chain in its side chain or a block polymer having a polyethylene oxide block is described in U.S. Patent Publication No. 2003/0064318. Also, a lithographic printing plate precursor having provided on a support, an image-forming layer containing polymer compound in which the main chain is branched to three or more branches is proposed as the lithographic printing plate precursor capable of undergoing on-press development in JP-A-2007-249036.

However, these techniques are still insufficient for achieving both good developing property and high printing durability.

US-A-4,041,108 teaches polymerizing triallyl isocyanurate with butyl acrylate to form an acrylic rubber latex. This latex is then mixed with styrene, lauroyl peroxide and cumene hydroperoxide and then further polymerized.

US-A-3,830,878 teaches polymerizing triallyl cyanurate with a monomer mixture in the presence of potassium persulfate. The resulting polymer is then further polymerized with a monomer mixture including n-butyl acrylate and triallyl cyanurate to form a rubber latex.

### SUMMARY OF THE INVENTION

An object of the present invention is to provide a lithographic printing plate precursor exhibiting good developing property while maintaining printing durability in case of using the polymerizable composition in an image-recording layer of the lithographic printing plate precursor and a lithographic printing method.

As a result of the intensive investigations, the inventors have achieved the above-described objects by incorporating a polymerizable composition containing a polymer compound having a specific structure into an image-recording layer. Specifically, the present invention includes the following items.

According to a first aspect, the present invention provides a lithographic printing plate precursor comprising a support and an image-recording layer comprising a polymerizable composition comprising a polymerizable compound, a polymerization initiator and a polymer compound in which polymer chains are branched from an isocyanuric acid skeleton as a branch point.

Preferably the polymer chain comprises a repeating unit having an ethylenically unsaturated group.

Preferably the polymerizable compound comprises an isocyanuric acid skeleton.

In a particularly preferred embodiment, the image-recording layer is capable of being removed with at least one of printing ink and dampening water.

According to a second aspect, the present invention provides a lithographic printing method comprising after either mounting the lithographic printing plate precursor according to the above particularly preferred embodiment on a printing machine and exposing imagewise the mounted lithographic printing plate precursor using a laser or exposing imagewise the lithographic printing plate precursor according to the above particularly preferred aspect using a laser and mounting the exposed lithographic printing plate precursor on a printing machine, supplying at least one of printing ink and dampening water on to the exposed lithographic printing plate precursor to remove an unexposed area of the image-recording layer and conducting printing.

According to the invention, the above-described objects can be achieved by using the photosensitive composition containing a polymer compound in which polymer chains are branched from an isocyanuric acid skeleton as a branch point.

The functional mechanism of the invention is not quite clear but it is believed that a strong polymerized cured layer which is prevented from decrease in layer thickness can be formed because the polymer compound contains an isocyanuric acid skeleton and further compatibility is increased by using a polymerizable compound containing an isocyanuric acid skeleton in combination so that the strong polymerized cured layer which is prevented from decrease in layer thickness can be formed in the exposed area and the unexposed area of the image-recording layer becomes easily removable.

According to the present invention, a lithographic printing plate precursor exhibiting good developing property while maintaining printing durability can be provided by using a polymerizable composition in the image-recording layer thereof which is capable of forming a good polymerized cured layer which is prevented from decrease in layer thickness.

### BRIEF DESCRIPTION OF THE DRAWINGS

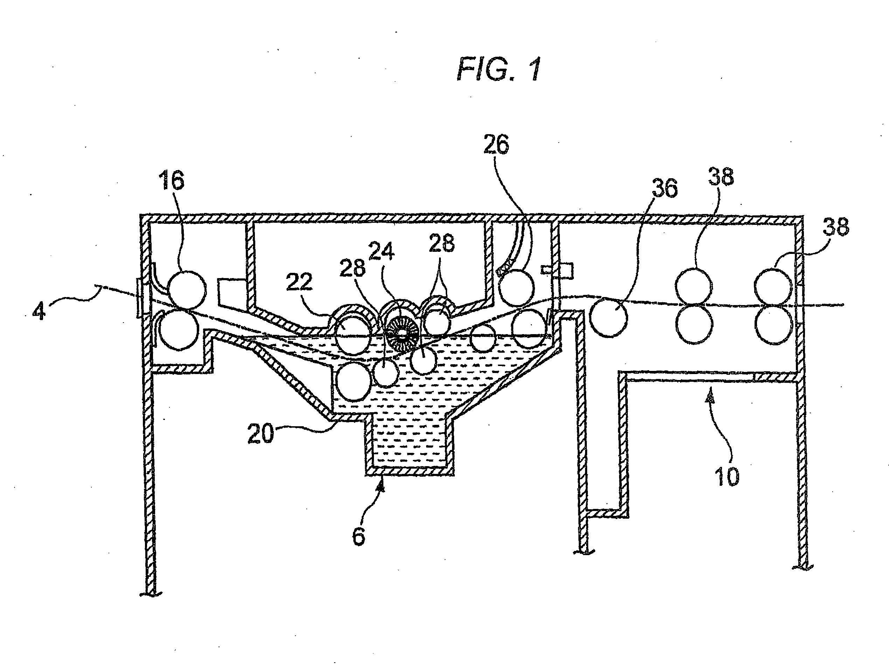

Fig. 1 is a view showing a structure of an automatic development processor used in the example.

### [Description of reference numerals and signs]

- 4:: Lithographic printing plate precursor (PS plate)
- 6:: Developing unit
- 10:: Drying unit
- 16:: Carrying-in roller
- 20:: Developing tank
- 22:: Transport roller
- 24:: Brush roller
- 26:: Squeeze roller (carrying-out roller)
- 28:: Backup roller
- 36:: Guide roller
- 38:: Skewer roller

### DETAILED DESCRIPTION OF THE INVENTION

The present invention is described in detail below.

### [Polymerizable composition]

The polymerizable composition used in the invention contains a polymerizable compound, a polymerization initiator and a polymer compound in which polymer chains are branched from an isocyanuric acid skeleton as a branch point.

### [Polymer compound in which polymer chains are branched from isocyanuric acid skeleton as branch point]

As the polymer compound (hereinafter, also referred to as "polymer compound according to the invention") in which polymer chains are branched from an isocyanuric acid skeleton as a branch point according to the invention, a polymer compound represented by formula (1) shown below is particularly preferred.

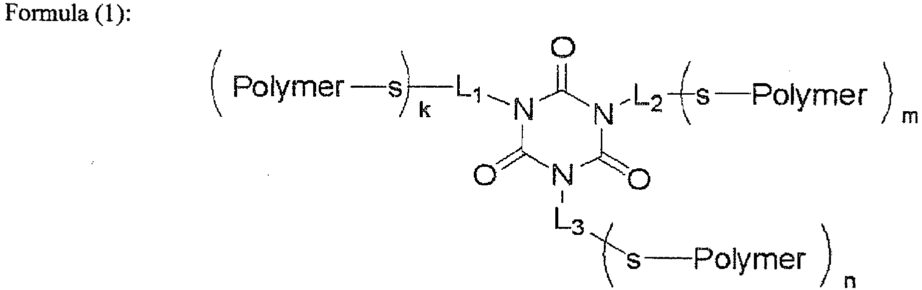

In formula (1), L₁ to L₃ each independently represents a divalent or higher valent connecting group containing one or more elements selected from C, O, N, halogen, P, Si, S and H, and is particularly preferably a divalent connecting group containing one or more elements selected from C, O, N and H. m, n and k each independently represents an integer of 1 or more. Specific examples of L₁ to L₃ which can be used in the invention are set forth below, but the invention should not be construed as being limited thereto.

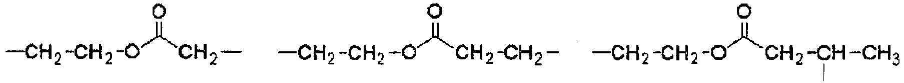

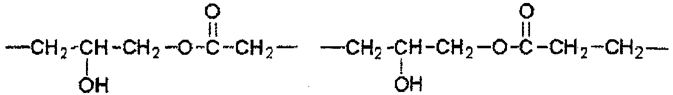

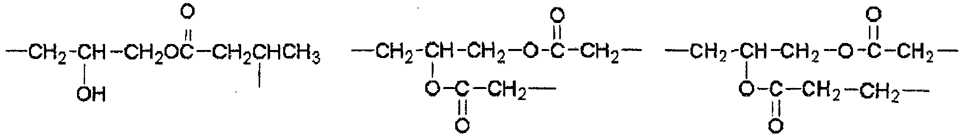

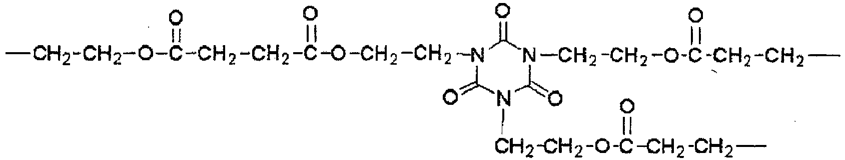

As Polymer in formula (1), any polymer chain may be preferably used as long as the structure in which polymer chains are branched from an isocyanuric acid skeleton as a branch point is maintained. For example, an acrylic resin and a polyvinyl acetal resin each having a film-forming property are exemplified.

Among them, the polymer chain is preferably formed by (a1) a repeating unit having at least one hydrophilic functional group and (a2) a repeating unit having at least one hydrophobic functional group.

The repeating unit having at least one hydrophilic functional group (a1) for forming the polymer chain includes repeating units having a functional group represented by -COOM¹, -SO₃M¹, -OH, -OSO₃M¹, -CONR¹R², -SO₂NR¹R², -NR¹SO₃M¹, -P(=O)(OM¹)(OM²), -OP(=O)(OM¹)(OM²), -Y³N⁺R¹R²L³¹A⁻, -Y³PO₄⁻L³²E⁺ (wherein M¹ and M² each represents a hydrogen ion, a metal ion, an ammonium ion or a phosphonium ion, and R¹ and R² each independently represents a hydrogen atom, an alkyl group, an alkenyl group, an aryl group or a heterocyclic group), ethylene oxide or propylene oxide.

R' and R² may be combined with each other to form a ring structure. L³¹ represents a connecting group. A⁻ represents a structure containing an anion. Y³ represents a single bond or a divalent connecting group selected from the group consisting of -CO-, -O- -NH-, a divalent aliphatic group, a divalent aromatic group and a combination thereof. L³² represents a connecting group. E⁺ represents a structure containing a cation.

In the case where any one of M¹ and M² represents the metal ion, specific examples of the metal ion include Li⁺, Na⁺, K⁺ and Cu⁺. Of the metal ions, Li⁺, Na⁺ or K⁺ is particularly preferred.

In the case where any one of M¹ and M² represents the ammonium ion, any ordinary ammonium ion can be preferably used and an ammonium ion having a number of carbon atoms of 24 or less per molecule is preferred and an ammonium ion having a number of carbon atoms of 16 or less per molecule is particularly preferred.

In the case where any one of M¹ and M² represents the phosphonium ion, any ordinary phosphonium ion can be preferably used and a phosphonium ion having a number of carbon atoms of 24 or less per molecule is preferred and a phosphonium ion having a number of carbon atoms of 16 or less per molecule is particularly preferred.

In the case where any one of R¹ and R² represents the alkyl group, any ordinary alkyl group can be used, and it may be a branched or cyclic form and may have a substituent, for example, a halogen atom, an ether group, a thioether group, a hydroxy group, a cyano group, a keto group, a carboxylic acid group, a carboxylate group, a carbonic acid ester group, a carbonic acid amido group, a sulfonic acid group, a sulfonate group, a sulfonic acid ester group, a sulfonamido group, a sulfone group, a sulfoxide group, a phenyl group, a phosphonic acid group, a phosphonate group, a phosphoric acid group, a phosphate group, an amino group, an aminocarbonyl group, an aminocarboxyl group or an aminosulfonyl group. As the alkyl group, an alkyl group having a total number of carbon atoms of 12 or less is particularly preferred.

In the case where any one of R¹ and R² represents the alkenyl group, any ordinary alkenyl group can be used, and it may be a branched or cyclic form and may have a substituent, for example, a halogen atom, an ether group, a thioether group, a hydroxy group, a cyano group, a keto group, a carboxylic acid group, a carboxylate group, a carbonic acid ester group, a carbonic acid amido group, a sulfonic acid group, a sulfonate group, a sulfonic acid ester group, a sulfonamido group, a sulfone group, a sulfoxide group, a phenyl group, a phosphonic acid group, a phosphonate group, a phosphoric acid group, a phosphate group, an amino group, an aminocarbonyl group, an aminocarboxyl group or an aminosulfonyl group. As the alkenyl group, an alkenyl group having a total number of carbon atoms of 12 or less is particularly preferred.

In the case where any one of R¹ and R² represents the aryl group, any ordinary aryl group can be preferably used. The aryl group may have a substituent, for example, a halogen atom, an ether group, a thioether group, a hydroxy group, a cyano group, a nitro group, a keto group, a carboxylic acid group, a carboxylate group, a carbonic acid ester group, a carbonic acid amido group, a sulfonic acid group, a sulfonate group, a sulfonic acid ester group, a sulfonamido group, a sulfone group, a sulfoxide group, a phenyl group, a phosphonic acid group, a phosphonate group, a phosphoric acid group, a phosphate group, an amino group, an aminocarbonyl group, an aminocarboxyl group or an aminosulfonyl group. As the aryl group, an aryl group having a total number of carbon atoms of 12 or less is particularly preferred.

As the repeating unit having at least one hydrophilic functional group (a1) for forming the polymer chain, any repeating unit is preferably used as long as it is formed from a repeating unit having at least one of the hydrophilic functional groups. Specific examples of the repeating unit having a hydrophilic functional group which can be used in the invention are set forth below, but the invention should not be construed as being limited thereto.

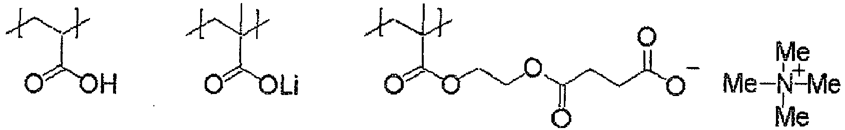

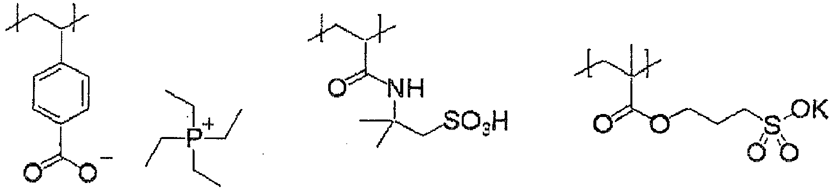

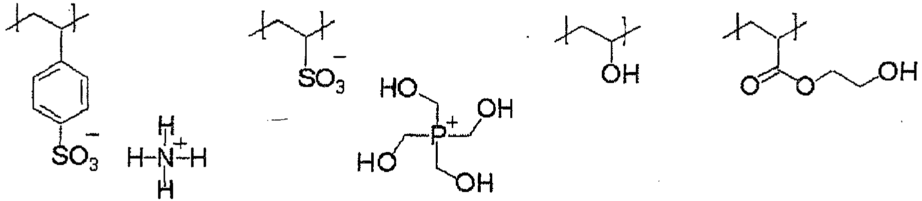

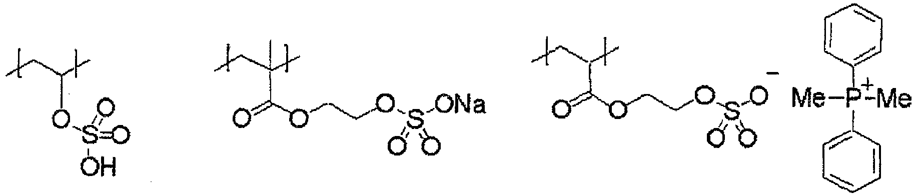

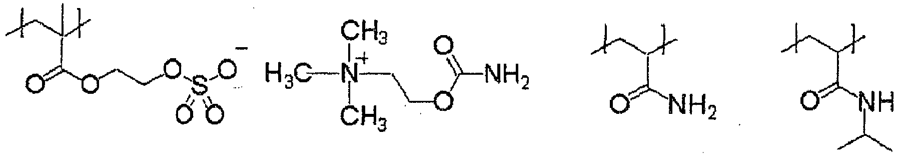

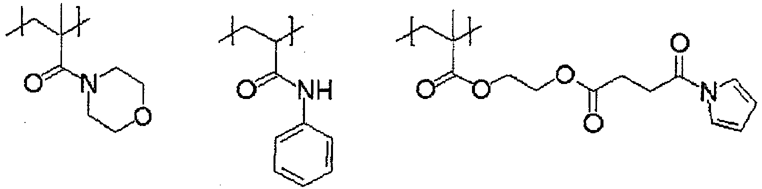

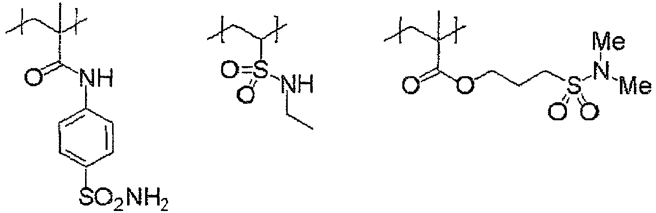

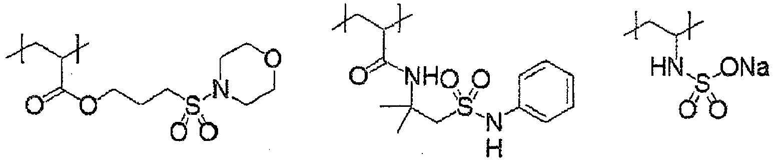

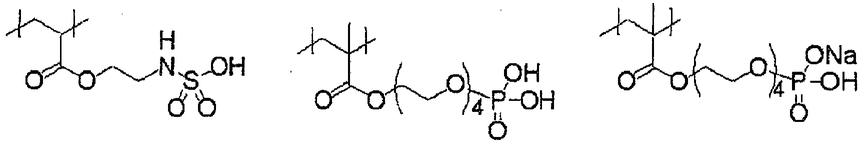

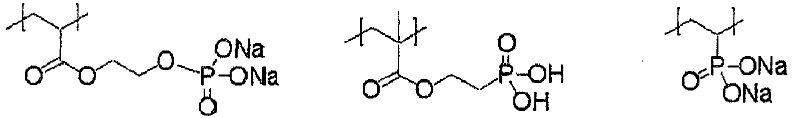

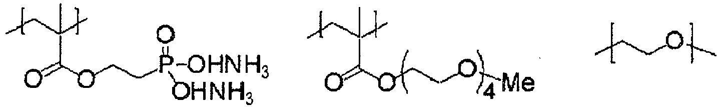

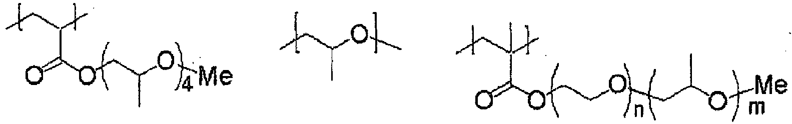

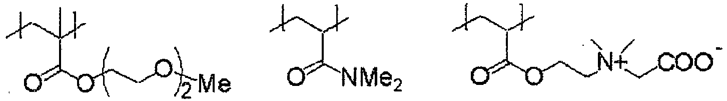

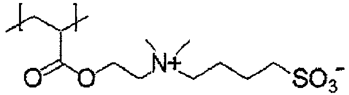

The repeating unit having at least one hydrophilic functional group (a1) for forming the polymer chain may be formed from only one kind or two or more kinds of the repeating units having the hydrophilic functional group described above.

The repeating unit having at least one hydrophobic functional group (a2) for use in the polymer chain is a repeating unit which does not have the hydrophilic functional group described above. Specific examples of such a repeating unit are set forth below, but the invention should not be construed as being limited thereto.

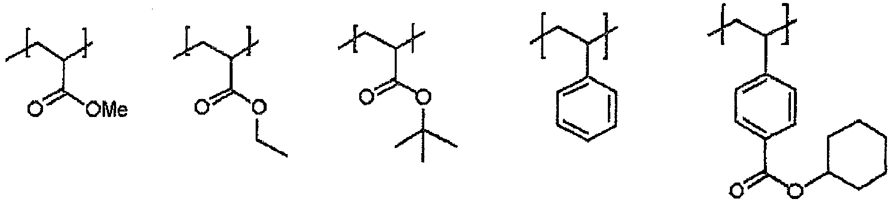

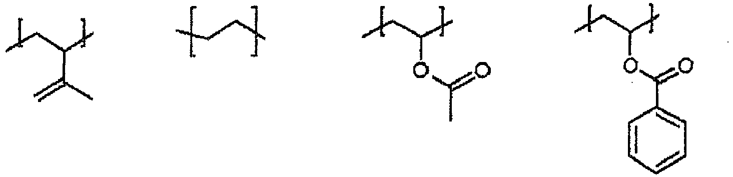

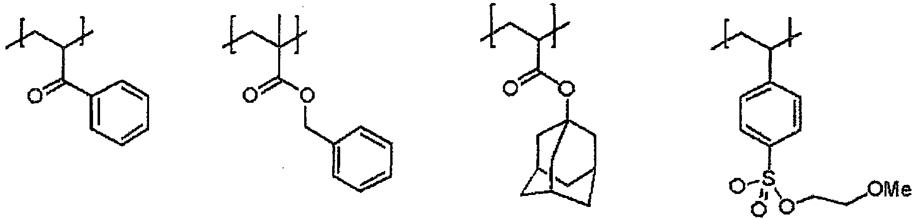

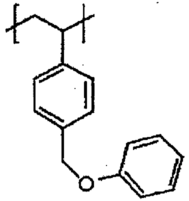

The repeating unit having at least one hydrophobic functional group (a2) for forming the polymer chain may be formed from only one kind or two or more kinds of the repeating units having the hydrophobic functional group as described above.

As Polymer in formula (1) for use in the invention, any polymer chain may be preferably used as long as it is formed from the repeating unit represented by formula (a1) and the repeating unit represented by formula (a2). The repeating unit (a1) is contained at a ratio preferably from 5 to 60% by mole, more preferably from 10 to 50% by mole, and the repeating unit (a2) is contained at a ratio preferably from 40 to 95% by mole, more preferably from 50 to 90% by mole.

In the polymerizable compound for use in the invention, any polymer chain may be preferably used as long as the structure in which polymer chains are branched from an isocyanuric acid skeleton as a branch point is maintained and it is desired that the polymer chain branched contains a repeating unit having an ethylenically unsaturated group for the purpose of increasing film strength of the image area. Due to the ethylenically unsaturated group, crosslinkage is formed between the polymer molecules and curing is accelerated.

As the ethylenically unsaturated group, for example, a (meth)acryl group, a vinyl group, an allyl group or a styryl group is preferred, and the ethylenically unsaturated group can be introduced into the polymer by a polymer reaction or copolymerization. For instance, a reaction between an acrylic polymer having a carboxyl group in its side chain and glycidyl methacrylate, a reaction between a polymer having an epoxy group and a carboxylic acid having an ethylenically unsaturated group, for example, methacrylic acid, or a reaction between a hydroxy group and a methacrylate having an isocyanate group can be utilized.

Specific examples of the repeating unit having an ethylenically unsaturated group for use in the invention are set forth below, but the invention should not be construed as being limited thereto.

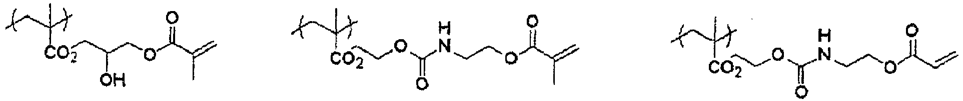

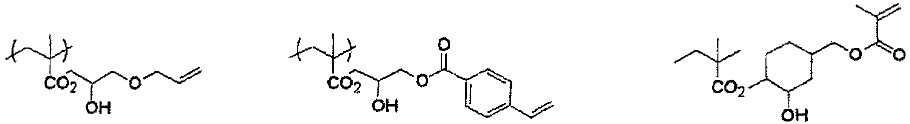

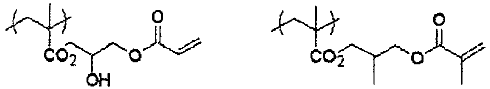

The content of the ethylenically unsaturated group in the polymer compound according to the invention is preferably from 0.1 to 10.0 mmol, more preferably from 0.25 to 7.0 mmol, most preferably from 0.5 to 5.5 mmol, per 1 g of the polymer compound.

Specific examples of the branched type polymer (polymer compound according to the invention) for use in the invention are set forth in the following Tables 1 to 3, but the invention should not be construed as being limited thereto. In the following specific examples, the numbers recited with each of the repeating units (the numbers recited with the repeating units of the main chain) are mole percent.

**Table 1**

| | | | | n | m | k | Mw(x 10⁴) |
|---|---|---|---|---|---|---|---|
| | L 1 | L2 | L3 | 1 | 1 | 1 | 4.4 |
| | 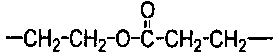 | 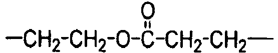 | 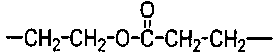 | | | | |
| A-1 | Polymer | | | | | | |
| | 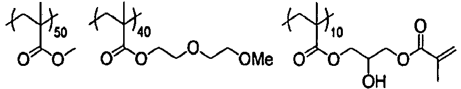 | | | | | | |
| | L1 | L2 | L3 | 1 | 1 | 1 | 5.0 |
| | 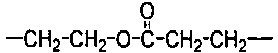 | 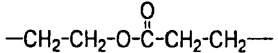 | 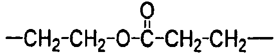 | | | | |
| A-2 | Polymer | | | | | | |
| | 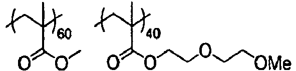 | | | | | | |
| | L1 | L2 | L3 | 1 | 1 | 1 | 2.5 |
| | 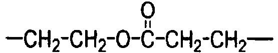 | 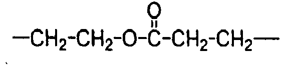 | 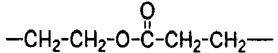 | | | | |
| A-3 | Polymer | | | | | | |
| | 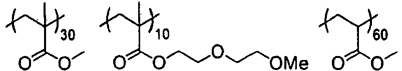 | | | | | | |
| | L1 | L2 | L3 | 1 | 1 | 1 | 3.3 |
| | 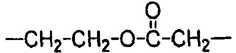 | 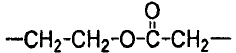 | 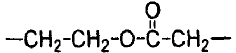 | | | | |
| A-4 | Polymer | | | | | | |
| | 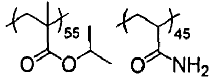 | | | | | | |
| | L1 | L2 | L3 | 1 | 1 | 1 | 4.5 |
| | 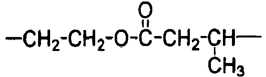 | 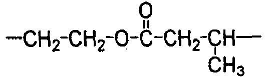 | 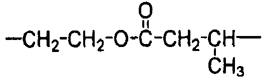 | | | | |
| A-5 | Polymer | | | | | | |
| | 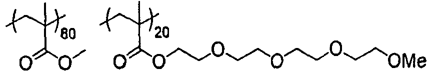 | | | | | | |
| | L1 | L2 | L3 | 1 | 1 | 1 | 3.0 |
| | 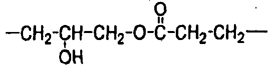 | 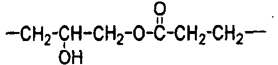 | 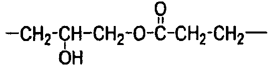 | | | | |
| A-6 | Polymer | | | | | | |
| | 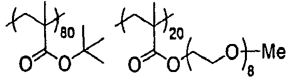 | | | | | | |
| | L1 | L2 | L3 | 2 | 2 | 2 | 5.6 |
| | 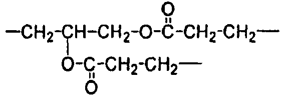 | 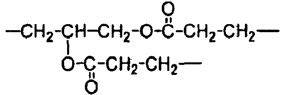 | 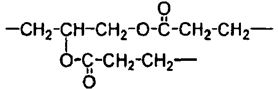 | | | | |
| A-7 | Polymer | | | | | | |
| | 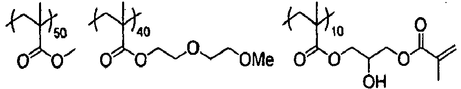 | | | | | | |
| | L1 | L2 | L3 | 1 | 1 | 2 | 7.2 |
| | 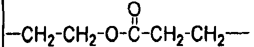 | 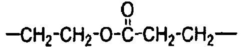 | 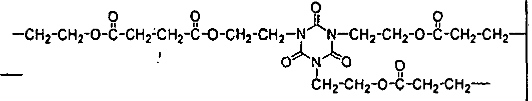 | | | | |
| A-8 | Polymer | | | | | | |
| | 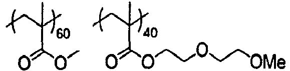 | | | | | | |
| | L1 | L2 | L3 | 2 | 2 | 2 | 4.5 |
| | 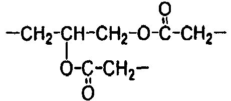 | 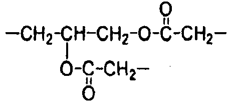 | 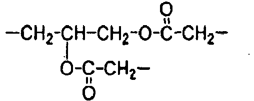 | | | | |
| A-9 | Polymer | | | | | | |
| | 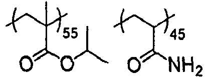 | | | | | | |
| | L1 | L2 | L3 | 2 | 2 | 2 | 5.1 |
| | 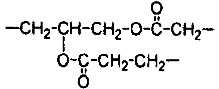 | 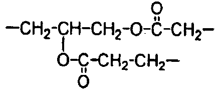 | 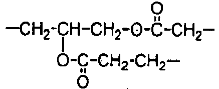 | | | | |
| A-10 | Polymer | | | | | | |
| | 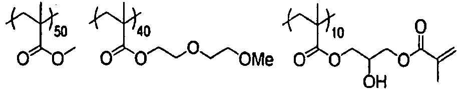 | | | | | | |

**Table 2**

| | | | | n | m | k | Mw(x 10⁴) |
|---|---|---|---|---|---|---|---|
| | L1 | L2 | L3 | 1 | 1 | 1 | 2.2 |
| | 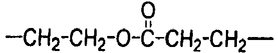 | 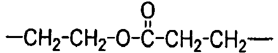 | 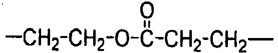 | | | | |
| A-11 | Polymer | | | | | | |
| | 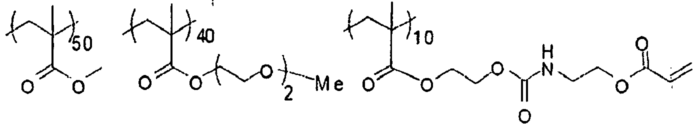 | | | | | | |
| | L1 | L2 | L3 | 1 | 1 | 1 | 1.8 |
| | 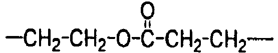 | 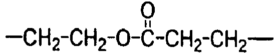 | 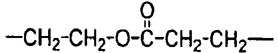 | | | | |
| A-12 | Polymer | | | | | | |
| | 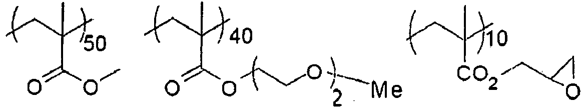 | | | | | | |
| | L1 | L2 | L3 | 1 | 1 | 1 | 1.8 |
| | 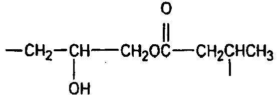 | 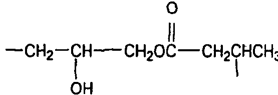 | 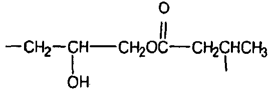 | | | | |
| A-13 | Polymer | | | | | | |
| | 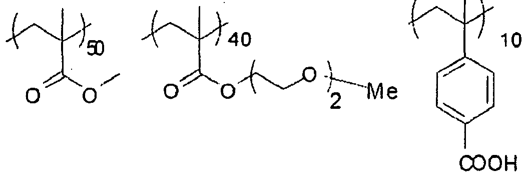 | | | | | | |
| | L1 | L2 | L3 | 1 | 1 | 1 | 5.5 |
| | 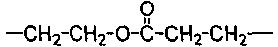 | 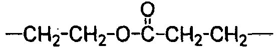 | 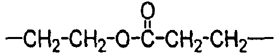 | | | | |
| A-14 | Polymer | | | | | | |
| | 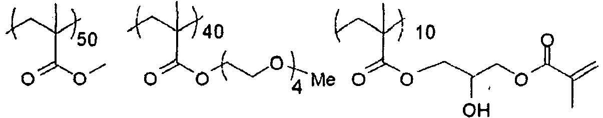 | | | | | | |
| | L1 | L2 | L3 | 1 | 1 | 1 | 4.8 |
| | 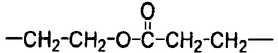 | 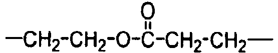 | 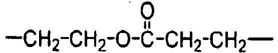 | | | | |
| A-15 | Polymer | | | | | | |
| | 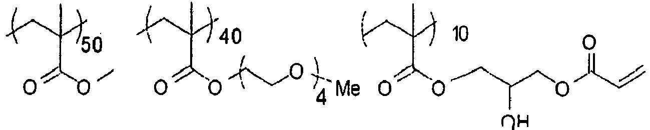 | | | | | | |
| | L1 | L2 | L3 | 1 | 1 | 1 | 9.0 |
| | 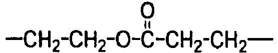 | 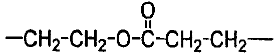 | 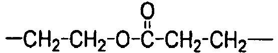 | | | | |
| A-16 | Polymer | | | | | | |
| | 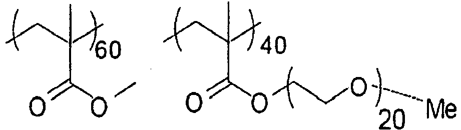 | | | | | | |
| | L1 | L2 | L3 | 1 | 1 | 1 | 4.3 |
| | 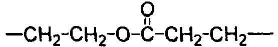 | 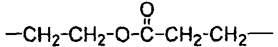 | 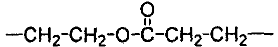 | | | | |
| A-17 | Polymer | | | | | | |
| | 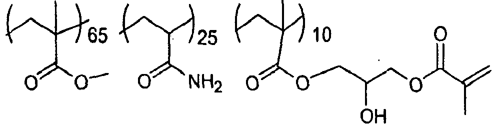 | | | | | | |
| | L1 | L2 | L3 | 1 | 1 | 1 | 4.1 |
| | 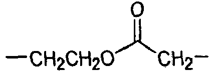 | 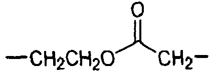 | 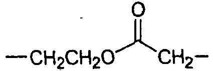 | | | | |
| A-18 | Polymer | | | | | | |
| | 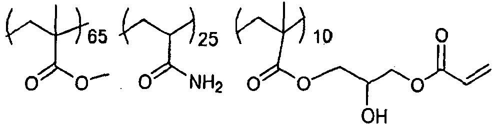 | | | | | | |
| | L1 | L2 | L3 | 2 | 2 | 2 | 3.9 |
| | 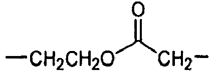 | 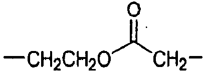 | 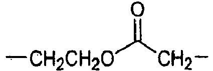 | | | | |
| A-19 | Polymer | | | | | | |
| | 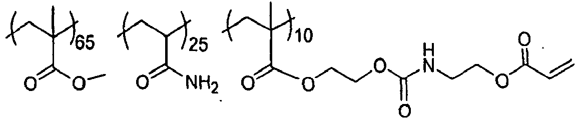 | | | | | | |
| | L1 | L2 | L3 | 1 | 1 | 1 | 5.5 |
| | 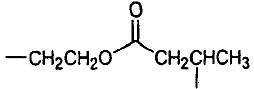 | 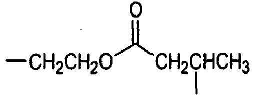 | 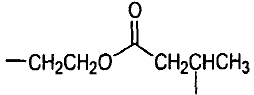 | | | | |
| A-20 | Polymer | | | | | | |
| | 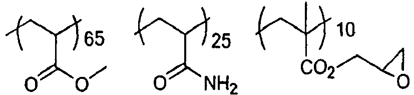 | | | | | | |

**Table 3**

| | | | | n | m | k | Mw(x 10⁴) |
|---|---|---|---|---|---|---|---|
| | L1 | L2 | L3 | 1 | 1 | 1 | 2.6 |
| | 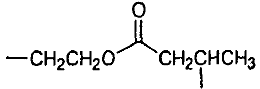 | 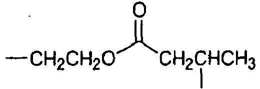 | 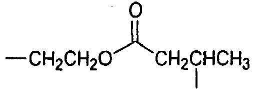 | | | | |
| A-21 | Polymer | | | | | | |
| | 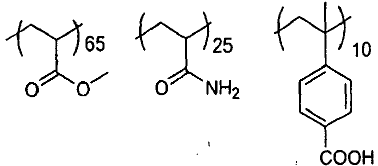 | | | | | | |
| | L1 | L2 | L3 | 1 | 1 | 1 | 2.6 |
| | 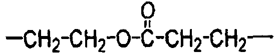 | 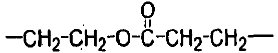 | 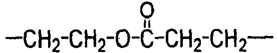 | | | | |
| A-22 | Polymer | | | | | | |
| | 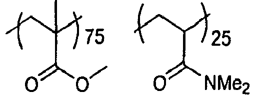 | | | | | | |
| | 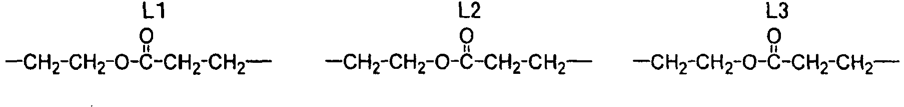 | | | 1 | 1 | 1 | 3.1 |
| A-23 | Polymer | | | | | | |
| | 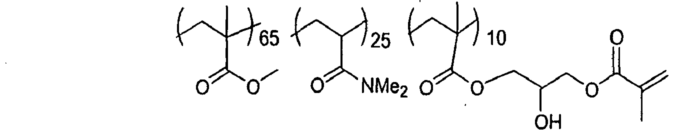 | | | | | | |
| | 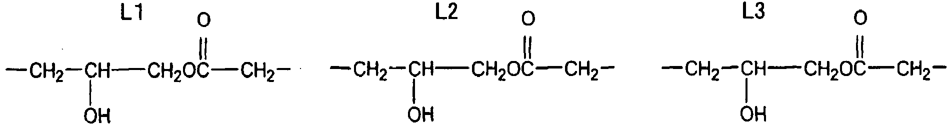 | | | 1 | 1 | 1 | 3.5 |
| A-24 | Polymer | | | | | | |
| | 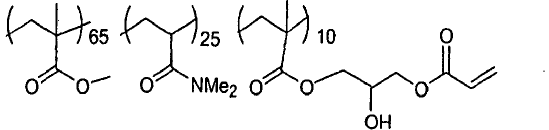 | | | | | | |
| | 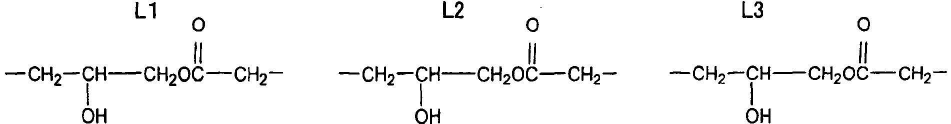 | | | 1 | 2 | 1 | 4.0 |
| A-25 | Polymer | | | | | | |
| | 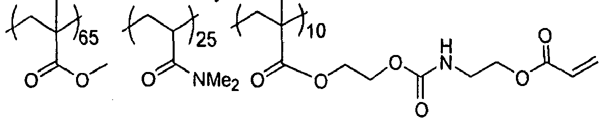 | | | | | | |
| | 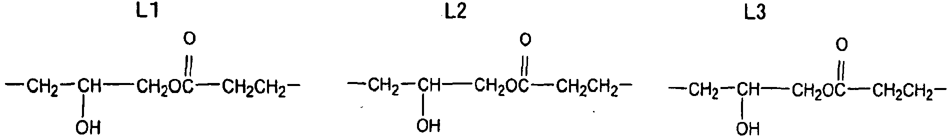 | | | 2 | 1 | 1 | 5.6 |
| A-26 | Polymer | | | | | | |
| | 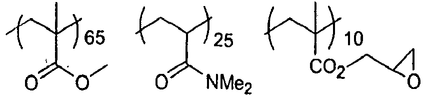 | | | | | | |
| | 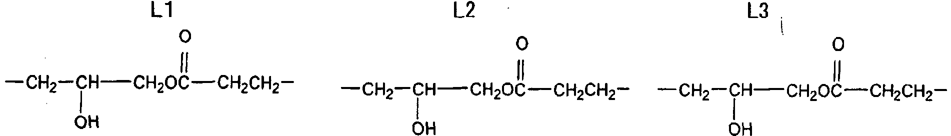 | | | 2 | 2 | 2 | 1.5 |
| A-27 | Polymer | | | | | | |
| | 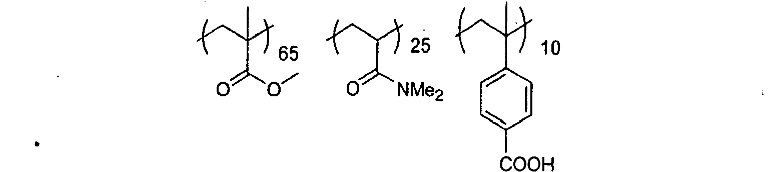 | | | | | | |
| | 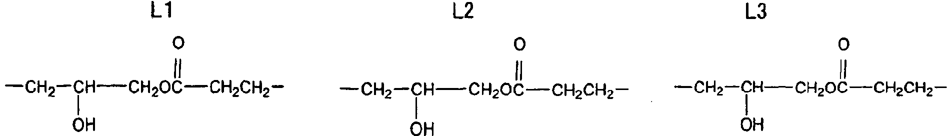 | | | 1 | 2 | 2 | 3.3 |
| A-28 | Polymer | | | | | | |
| | 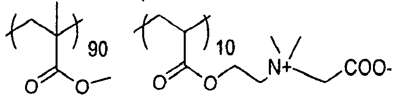 | | | | | | |
| | 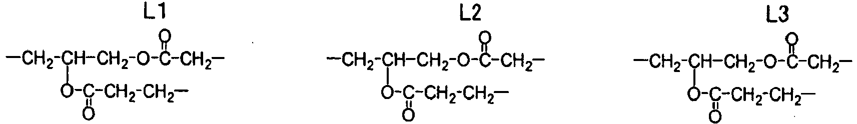 | | | 1 | 1 | 1 | 3.4 |
| A-29 | Polymer | | | | | | |
| | 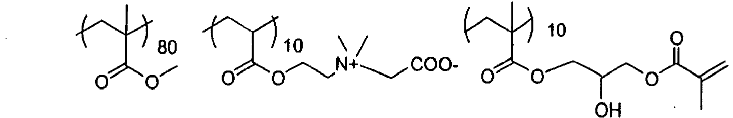 | | | | | | |
| | 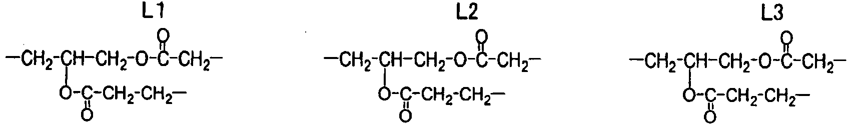 | | | 1 | 1 | 1 | 2.5 |
| A-30 | Polymer | | | | | | |
| | 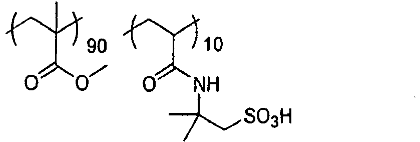 | | | | | | |
| | 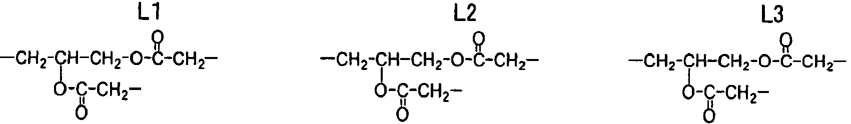 | | | 1 | 1 | 1 | 7.8 |
| A-31 | Polymer | | | | | | |
| | 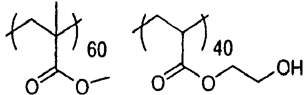 | | | | | | |
| | 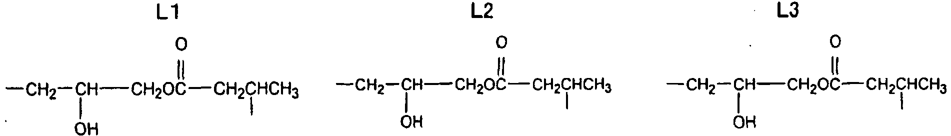 | | | 1 | 1 | 1 | 4.1 |
| A-32 | Polymer | | | | | | |
| | 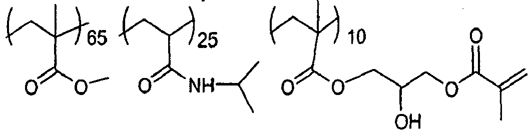 | | | | | | |
| | 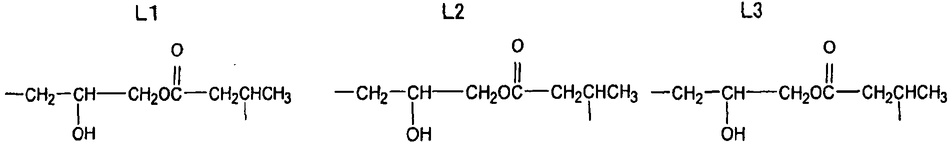 | | | 1 | 1 | 1 | 5.0 |
| A-33 | Polymer | | | | | | |
| | 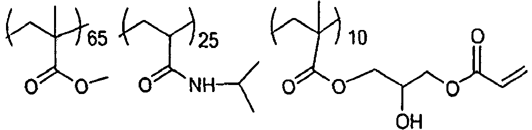 | | | | | | |

The polymer compounds according to the invention may be used only one kind or two or more kinds in combination.

The weight average molecular weight (Mw) of the polymer compound according to the invention is preferably from 5,000 to 500,000, and more preferably from 10,000 to 250,000.

The weight average molecular weight (Mw) is determined by a gel permeation chromatography (GPC) method using tetrahydrofuran as a developing solvent and mono-dispersed polystyrene as a standard substance.

The content of the polymer compound in the image-recording layer of the lithographic printing plate precursor is preferably from 0.5 to 90% by weight, more preferably from 1 to 80% by weight, still more preferably from 1.5 to 70% by weight, based on the total solid content of the image-recording layer.

Although the multi-branched type polymer for use in the invention can be synthesized by a known polymerization method, for example, a method comprising radical polymerization using a polymerization initiator and/or chain transfer agent containing a specific functional group in its molecule and then condensation of the resulting polymer with a polyfunctional compound having many functional groups capable of reacting with the specific functional group or a method of radical polymerization using a polyfunctional chain transfer agent, the method of radical polymerization using a polyfunctional chain transfer agent is particularly preferred from the standpoint of ease of synthesis.

### [Polymerization initiator]

The polymerization initiator for use in the invention is a compound which initiates or accelerates polymerization of a polymerizable compound. The polymerization initiator for use in the invention is preferably a radical polymerization initiator, and includes, for example, known thermal polymerization initiators, compounds containing a bond having small bond dissociation energy and photopolymerization initiators.

The polymerization initiator may be, for example, (a) an organic halide, (b) a carbonyl compound, (c) an azo compound, (d) an organic peroxide, (e) a metallocene compound, (f) an azido compound, (g) a hexaarylbiimidazole compound, (h) an organic borate compound, (i) a disulfone compound, (j) an oxime ester compound and (k) an onium salt compound.

As the organic halide (a), compounds described in Paragraph Nos. [0022] to [0023] of JP-A-2008-195018 are preferred.

As the carbonyl compound (b), compounds described in Paragraph No. [0024] of JP-A-2008-195018 are preferred.

As the azo compound (c), for example, azo compounds described in JP-A-8-108621 are used.

As the organic peroxide (d), for example, compounds described in Paragraph No. [0025] of JP-A-2008-195018 are preferred.

As the metallocene compound (e), for example, compounds described in Paragraph No. [0026] of JP-A-2008-195018 are preferred.

As the azido compound (f), a compound, for example, 2,6-bis(4-azidobenzylidene)-4-methylcyclohexanone is exemplified.

As the hexaarylbiimidazole compound (g), for example, compounds described in Paragraph No. [0027] of JP-A-2008-195018 are preferred.

As the organic borate compound (h), for example, compounds described in Paragraph No. [0028] of JP-A-2008-195018 are preferred.

As the disulfone compound (i), for example, compounds described in JP-A-61-166544 and JP-A-2002-328465 are exemplified.

As the oxime ester compound (j), for example, compounds described in Paragraph Nos. [0028] to [0030] of JP-A-2008-195018 are preferred.

As the onium salt compound (k), onium salts, for example, diazonium salts described in S. I. Schlesinger, Photogr. Sci. Eng., 18, 387 (1974), T. S. Bal et al., Polymer, 21, 423 (1980) and JP-A-5-158230 (corresponding to diazonium of N13), ammonium salts described in U.S. Patent 4,069,055 and JP-A-4-365049, phosphonium salts described in U.S. Patents 4,069,055 and 4.069,056, iodonium salts described in European Patent 104,143, U. S. Patent Publication No. 2008/0311520, JP-A-2-150848, JP-A-2008-195018 and J.V. Crivello et al., Macromolecules, 10 (6), 1307 (1977), sulfonium salts described in European Patents 370,693, 233,567, 297,443 and 297,442, U.S. Patents 4,933,377, 4,760,013, 4,734,444 and 2,833,827 and German Patents 2,904,626, 3,604,580 and 3,604,581, selenonium salts described in J.V. Crivello et al., J. Polymer Sci., Polymer Chem. Ed., 17, 1047 (1979), arsonium salts described in C.S. Wen et al., Teh, Proc. Conf. Rad. Curing ASIA, p. 478, Tokyo, Oct. (1988), and azinium salts described in JP-A-2008-195018 are exemplified.

Of the polymerization initiators, the onium salt, particularly, the iodonium salt, sulfonium salt and azinium salt are preferred. Specific examples of these compounds are set forth below, but the invention should not be construed as being limited thereto.

Of the iodonium salts, a diphenyliodonium salt is preferred. In particular, a diphenyliodonium salt substituted with an electron donating group, for example, an alkyl group or an alkoxy group is preferred, and an asymmetric diphenyliodonium salt is more preferred. Specific examples of the iodonium salt include diphenyliodonium hexafluorophosphate, 4-methoxyphenyl-4-(2-methylpropyl)phenyliodonium hexafluorophosphate, 4-(2-methylpropyl)phenyl-p-tolyliodonium hexafluorophosphate, 4-hexyloxyphenyl-2,4,6-trimethoxyphenyliodonium hexafluorophosphate, 4-hexyloxyphenyl-2,4-diethoxyphenyliodonium tetrafluoroborate, 4-octyloxyphenyl-2,4,6-trimethoxyphenyliodonium 1-perfluorobutanesulfonate, 4-octyloxyphenyl-2,4,6-trimethoxyphenyliodonium hexafluorophosphate and bis(4-tert-butylphenyl)iodonium tetraphenylborate.

Examples of the sulfonium salt include triphenylsulfonium hexafluorophosphate, triphenylsulfonium benzoylformate, bis(4-chlorophenyl)phenylsulfonium benzoylformate, bis(4-chlorophenyl)-4-methylphenylsulfonium tetrafluoroborate, tris(4-chlorophenyl)sulfonium 3,5-bis(methoxycarbonyl)benzenesulfonate and tris(4-chlorophenyl)sulfonium hexafluorophosphate.

Examples of the azinium salt include 1-cyclohexylmethyloxypyridinium hexafluorophosphate, 1-cyclohexyloxy-4-phenylpyridinium hexafluorophosphate, 1-ethoxy-4-phenylpyridinium hexafluorophosphate, 1-(2-ethylhexyloxy)-4-phenylpyridinium hexafluorophosphate, 4-chloro-1-cyclohexylmethyloxypyridinium hexafluorophosphate, 1-ethoxy-4-cyanopyridinium hexafluorophosphate, 3,4-dichloro-1-(2-ethylhexyloxy)pyridinium hexafluorophosphate, 1-benzyloxy-4-phenylpyridinium hexafluorophosphate, 1-phenethyloxy-4-phenylpyridinium hexafluorophosphate, 1-(2-ethylhexyloxy)-4-phenylpyridinium p-toluenesulfonate, 1-(2-ethylhexyloxy)-4-phenylpyridinium perfluorobutanesulfonate, 1-(2-ethylhexyloxy)-4-phenylpyridinium bromide and 1-(2-ethylhexyloxy)-4-phenylpyridinium tetrafluoroborate.

The polymerization initiator can be added preferably in an amount from 0.1 to 50% by weight, more preferably from 0.5 to 30% by weight, particularly preferably from 0.8 to 20% by weight, based on the total solid content constituting the image-recording layer. In the range described above, good sensitivity and good stain resistance in the non-image area at the time of printing are obtained.

### [Polymerizable compound]

The polymerizable compound for use in the polymerizable composition is an addition-polymerizable compound having at least one ethylenically unsaturated double bond and it is selected from compounds having at least one, preferably two or more, terminal ethylenically unsaturated double bonds. The polymerizable compound has a chemical form, for example, a monomer, a prepolymer, specifically, a dimer, a trimer or an oligomer, or a mixture thereof.

Examples of the monomer include unsaturated carboxylic acids (for example, acrylic acid, methacrylic acid, itaconic acid, crotonic acid, isocrotonic acid or maleic acid) and esters or amides thereof. Preferably, esters of an unsaturated carboxylic acid with a polyhydric alcohol compound and amides of an unsaturated carboxylic acid with a polyvalent amine compound are used. An addition reaction product of an unsaturated carboxylic acid ester or amide having a nucleophilic substituent, for example, a hydroxy group, an amino group or a mercapto group, with a monofunctional or polyfunctional isocyanate or epoxy compound, or a dehydration condensation reaction product of the unsaturated carboxylic acid ester or amide with a monofunctional or polyfunctional carboxylic acid is also preferably used. Moreover, an addition reaction product of an unsaturated carboxylic acid ester or amide having an electrophilic substituent, for example, an isocyanate group or an epoxy group with a monofunctional or polyfunctional alcohol, amine or thiol, or a substitution reaction product of an unsaturated carboxylic acid ester or amide having a releasable substituent, for example, a halogen atom or a tosyloxy group with a monofunctional or polyfunctional alcohol, amine or thiol is also preferably used. In addition, compounds in which the unsaturated carboxylic acid described above is replaced by an unsaturated phosphonic acid, styrene, vinyl ether or the like can also be used. These compounds are described in references including JP-T-2006-508380, JP-A-2002-287344, JP-A-2008-256850, JP-A-2001-342222, JP-A-9-179296, JP-A-9-179297, JP-A-9-179298, JP-A-2004-294935, JP-A-2006-243493, JP-A-2002-275129, JP-A-2003-64130, JP-A-2003-280187 and JP-A-10-333321.

Specific examples of the monomer, which is an ester of a polyhydric alcohol compound with an unsaturated carboxylic acid, include, as an acrylic acid ester, for example, ethylene glycol diacrylate, 1,3-butanediol diacrylate, tetramethylene glycol diacrylate, propylene glycol diacrylate, trimethylolpropane triacrylate, hexanediol diacrylate, tetraethylene glycol diacrylate, pentaerythritol tetraacrylate, sorbitol triacrylate, isocyanuric acid ethylene oxide (EO) modified triacrylate and polyester acrylate oligomer. As a methacrylic acid ester, for example, tetramethylene glycol dimethacrylate, neopentyl glycol dimethacrylate, trimethylolpropane trimethacrylate, ethylene glycol dimethacrylate, pentaerythritol trimethacrylate, bis[p-(3-methacryloxy-2-hydroxypropoxy)phenyl]dimethylmethane and bis[p-(methacryloxyethoxy)phenyl]dimethylmethane are exemplified. Specific examples of the monomer, which is an amide of a polyvalent amine compound with an unsaturated carboxylic acid, include methylene bisacrylamide, methylene bismethacrylamide, 1,6-hexamethylene bisacrylamide, 1,6-hexamethylene bismethacrylamide, diethylenetriamine trisacrylamide, xylylene bisacrylamide and xylylene bismethacrylamide.

Urethane type addition-polymerizable compounds produced using an addition reaction between an isocyanate and a hydroxy group are also preferably used and specific examples thereof include vinylurethane compounds having two or more polymerizable vinyl groups per molecule obtained by adding a vinyl monomer containing a hydroxy group represented by formula (A) shown below to a polyisocyanate compound having two or more isocyanate groups per molecule, described in JP-B-48-41708.

CH₂=C(R₄)COOCH₂CH(R₅)OH (A)

wherein R₄ and R₅ each independently represents H or CH₃.

Also, urethane acrylates as described in JP-A-51-37193, JP-B-2-32293, JP-B-2-16765, JP-A-2003-344997 and JP-A-2006-65210, urethane compounds having an ethylene oxide skeleton described in JP-B-58-49860, JP-B-56-17654, JP-B-62-39417, JP-B-62-39418, JP-A-2000-250211 and JP-A-2007-94138, and urethane compounds having a hydrophilic group described in U.S. Patent 7,153,632, JP-T-8-505958, JP-A-2007-293221 and JP-A-2007-293223 are preferably used.

Of the compounds described above, from the standpoint of excellent balance between hydrophilicity relating to the on-press development property and polymerization ability relating to the printing durability, a polymerizable compound containing an isocyanuric acid skeleton represented by formula (2) shown below is particularly preferred.

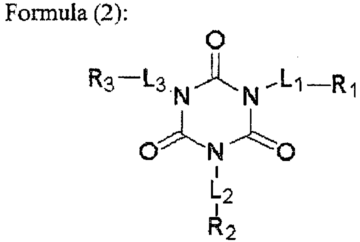

In formula (2), L₁to L₃ each represents a single bond or a connecting group same as that defined for L₁ to L₃ in formula (1). R₁ to R₃ each independently represents a hydrogen atom or a group selected from an alkyl group, an aryl group and a heterocyclic group, provided that at least one of R₁ to R₃ contains an ethylenically unsaturated group. As the ethylenically unsaturated group, for example, a (meth)acryl group, a vinyl group, an allyl group or a vinylphenyl group is preferred.

The alkyl group represented by any one of R₁ to R₃ includes a straight-chain, branched or cyclic alkyl group having from 1 to 20 carbon atoms. Among them, a straight-chain alkyl group having from 1 to 12 carbon atoms, a branched alkyl group having from 3 to 12 carbon atoms and a cyclic alkyl group having from 5 to 10 carbon atoms are more preferred.

Specific examples of the alkyl group include a methyl group, an ethyl group, a propyl group, a butyl group, a pentyl group, a hexyl group, a heptyl group, an octyl group, a nonyl group, a decyl group, an undecyl group, a dodecyl group, a tridecyl group, a hexadecyl group, an octadecyl group, an eicosyl group, an isopropyl group, an isobutyl group, a sec-butyl group, a tert-butyl group, an isopentyl group, a neopentyl group, a 1-methylbutyl group, an isohexyl group, a 2-ethylhexyl group, a 2-methylhexyl group, a cyclohexyl group, a cyclopentyl group and a 2-norbornyl group. It is preferred that the alkyl group further contains a hydroxy group.

The aryl group represented by any one of R₁ to R₃ preferably includes, for example, a benzene ring, a condensed ring formed from two to five benzene rings and a condensed ring formed from a benzene ring and a 5-membered to 7-membered unsaturated ring, each having from 6 to 30 carbon atoms. Among them, a benzene ring and a naphthalene ring are more preferred. Further, the aryl group represented by any one of R₁ to R₃ may have a substituent on the carbon atom which forms the ring and as such a substituent, the substituent in the case where any one of R₁ to R₃ represents the alkyl group described above is preferably exemplified.

In the case where the aryl group represented by any one of R₁ to R₃ has a substituent, the aryl group may have a substituent, for example, a halogen atom, an ether group, a thioether group, a hydroxy group, a cyano group, a nitro group, a keto group, a carboxylic acid group, a carboxylate group, a carbonic acid ester group, a carbonic acid amido group, a sulfonic acid group, a sulfonate group, a sulfonic acid ester group, a sulfonamido group, a sulfone group, a sulfoxide group, a phenyl group, a phosphonic acid group, a phosphonate group, a phosphoric acid group, a phosphate group, an amino group, an aminocarbonyl group, an aminocarboxyl group or an aminosulfonyl group. As the aryl group, an aryl group having a total number of carbon atoms of 12 or less is particularly preferred.

The heterocyclic group represented by any one of R¹ to R³ includes preferably a 3-membered to 8-membered heterocyclic group having from 6 to 30 carbon atoms which may have a condensed ring, more preferably a 3-membered to 6-membered heterocyclic group containing a nitrogen atom, an oxygen atom or a sulfur atom, and still more preferably a 5-membered to 6-membered heterocyclic group containing a nitrogen atom, an oxygen atom or a sulfur atom. Specific examples of the heterocyclic group include a pyrrole ring group, a furan ring group, a thiophene ring group, a benzopyrrole ring group, a benzofuran ring group, a benzothiophene ring group, a pyrazole ring group, an isoxazole ring group, an isothiazole ring group, an indazole ring, a benzisoxazole ring group, a benzisothiazole ring group, an imidazole ring group, an oxazole ring group, a thiazole ring group, a benzimidazole ring group, a benzoxazole ring group, a benzothiazole ring group, a pyridine ring group, a quinoline ring group, an isoquinoline ring group, a pyridazine ring group, a pyrimidine ring group, a pyrazine ring group, a phthalazine ring group, a quinazoline ring group, a quinoxaline ring group, an aciridine ring group, a phenanthrydine ring group, a carbazole ring group, a purine ring group, a pyrane ring group, a piperidine ring group, a piperazine ring group, a morpholine ring group, an indole ring group, an indolizine ring group, a chromene ring group, a cinnnoline ring group, an acridine ring group, a phenothiazine ring group, a tetrazole ring group and a triazine ring group.

Also, the heterocyclic group represented by any one of R¹ to R³ may have a substituent on the carbon atom forming the ring and as such a substituent, the substituent in the case where any one of R₁ to R₃ represents the alkyl group described above is preferably exemplified.

Of the groups represented by any one of R¹ to R³, the alkyl group further has a hydroxy group is particularly preferred. The groups represented by R¹ to R³ may be different groups from each other or two or more groups may be the same groups. It is more preferred that all of the groups represented by R¹ to R³ are the same groups.

Particularly preferable specific examples of the group represented by any one of R¹ to R³ are set forth below, but the invention should not be construed as being limited thereto.

An N-(2-hydroxyethyl)carbamoylethyl group, an N-(3-hydroxypropyl)carbamoylethyl group, an N-(2-hydroxyethyl)carbamoylpropyl group, an N-(3-hydroxypropyl)carbamoylpropyl group, an N-(2-(2-hydroxyethoxy)ethyl)carbamoylethyl group, an N,N-di(2-hydroxyethyl)carbamoylethyl group, an N,N-di(2-(2-hydroxyethoxy)ethyl)carbamoylethyl group, an N-(2-hydroxyethyl)carbamoyloxyethyl group, an N-(3-hydroxypropyl)carbamoyloxyethyl group, an N-(2-(2-hydroxyethoxy)ethyl)carbamoyloxyethyl group, an N-(2-(2-(2-hydroxyethoxy)ethoxy)ethyl)carbamoyloxyethyl group, an 2-(N-(2-hydroxyethyl)carbamoyloxy)ethoxyethyl group, an 2-(N-(3-hydroxypropyl)carbamoyloxy)ethoxyethyl group, an 2-(N-(2-(2-hydroxyethoxy)ethyl)carbamoyloxy)ethoxyethyl group, an 2-(N-(2-(2-(2-hydroxyethoxy)ethoxy)ethyl)carbamoyloxy)ethoxyethyl group, an N,N-di(2-hydroxymethyl)carbamoyloxyethyl group, an N,N-di(2-hydroxyethyl)carbamoyloxyethyl group, an N,N-di(2-hydroxypropyl)carbamoyloxyethyl group, an N,N-di(2-(2-hydroxyethoxy)ethyl)carbamoyloxyethyl group, an N-(2-hydroxyethyl)ureidoethyl group, an N-(3-hydroxypropyl)ureidoethyl group, an N-(2-(2-hydroxyethoxy)ethyl)ureidoethyl group, a 2-(N-(2-(2-(2-hydroxyethoxy)ethoxy)ethyl)ureidoethyl group, a 2-(N-(2-hydroxyethyl)ureido)ethoxyethyl group, a 2-(N-(3-hydroxypropyl)ureido)ethoxyethyl group, a 2-(N-(2-(2-hydroxyethoxy)ethyl)ureido)ethoxyethyl group, a 2-(N-(2-(2-(2-hydroxyethoxy)ethoxy)ethyl)ureido)ethoxyethyl group, an N,N-di(2-hydroxymethyl)ureidoethyl group, an N,N-di(2-hydroxyethyl)ureidoethyl group, an N,N-di(2-hydroxypropyl)ureidoethyl group, an N,N-di(2-(2-hydroxyethoxy)ethyl)ureidoethyl group, a 3-(N-(hydroxymethylcarbonyl)amino)propyl group, a 2-hydroxy-3-(N-(hydroxymethylcarbonyl)amino)propyl group, a 3-N-((2-hydroxyethoxy)methylcarbonyl)amino)propyl group, an N-(2-hydroxyethyl)carbamoyloxypropyl group, an N-(1,2-dihydroxyethyl)carbamoyloxypropyl group, a 2-hydroxy-3-(N-(1,2-dihydroxyethyl)carbamoyloxy)propyl group, an N-(2-hydroxyethoxycarbonyl)aminoethyl group, an N-(2-hydroxyethoxycarbonyl)aminopropyl group, an N-(3-hydroxypropoxycarbonyl)aminoethyl group, an N-(3-hydroxypropoxycarbonyl)aminopropyl group, an N-(2,3-dihydroxypropoxycarbonyl)aminoethyl group, an N-(2,3-dihydroxypropoxycarbonyl)aminopropyl group, an N-(2-hydroxyethyl)ureidopropyl group, an N-(1,2-dihydroxyethyl)ureidoethyl group and an N-(1,2-hydroxyethyl)ureidopropyl group are exemplified.

Specific examples of the polymerizable compound for use in the invention are set forth below, but the invention should not be construed as being limited thereto.

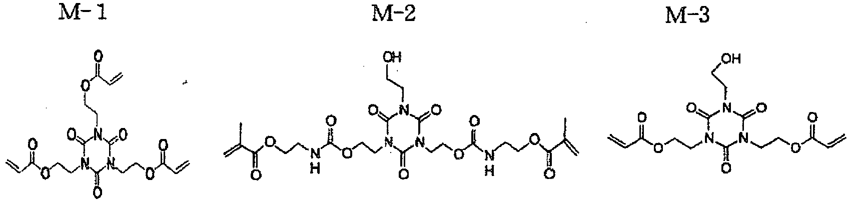

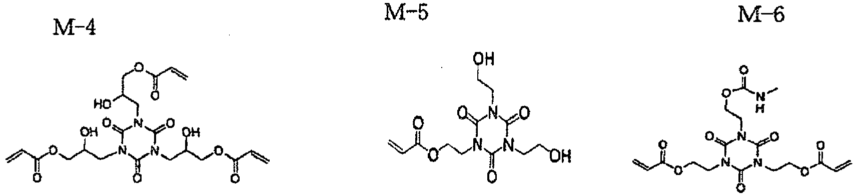

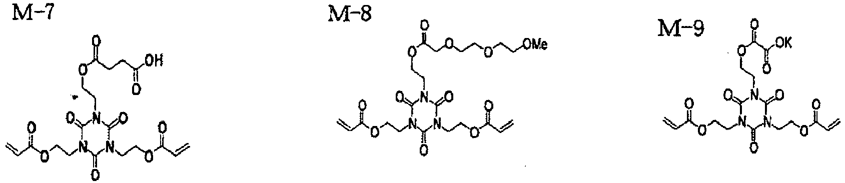

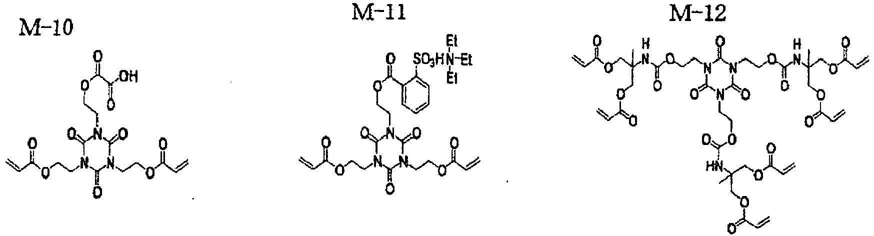

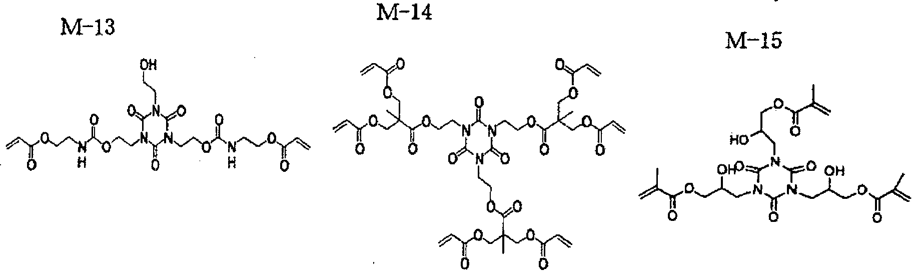

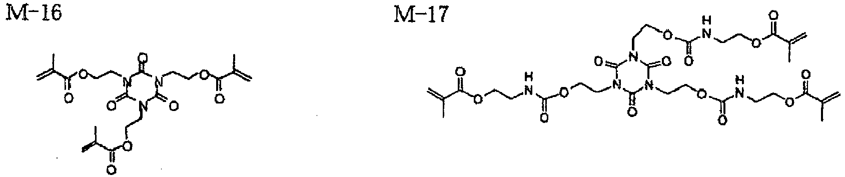

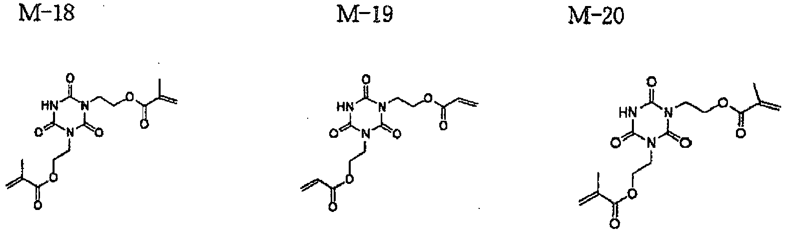

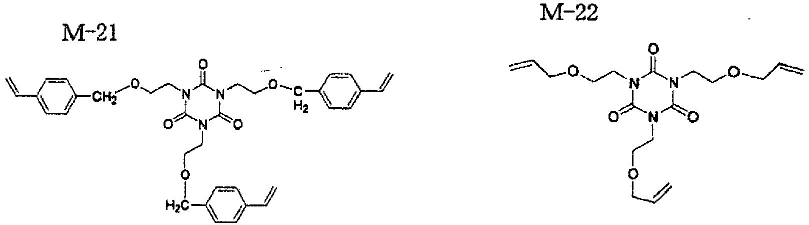

Details of the method of using the polymerizable compound, for example, selection of the structure, individual or combination use or an amount added, can be appropriately determined in accordance with the characteristic design of the final polymerizable composition or lithographic printing plate precursor described below. In the case where the polymerizable composition is used in the image-recording layer of a lithographic printing plate precursor, the polymerizable compound is used preferably in a range from 1 to 75% by weight, more preferably in a range from 3 to 70% by weight, particularly preferably in a range from 5 to 60% by weight, based on the total solid content of the image-recording layer.

### [Lithographic printing plate precursor]

The lithographic printing plate precursor according to the invention comprising an image-recording layer containing the polymerizable composition described above on a support having a hydrophilic surface. If desired, an undercoat layer can be provided between the support and the image-recording layer or a protective layer can be provided on the image-recording layer.

### (Image-recording layer)

The image-recording layer for use in the lithographic printing plate precursor according to the invention contains the polymerizable composition described above. Constituting components of the image-recording layer other than the polymerizable composition described above are described in detail below.

The image-recording layer for use in the invention is preferably an image-recording layer capable of undergoing on-press development. Also, the image-recording layer may contain a sensitizing dye and in the case of using an infrared absorbing dye as the sensitizing dye, a hydrophobilizing precursor may be further contained. By combination use of heat fusion or heat reaction of the hydrophobilizing precursor, a hydrophobic region (image area) is formed.

### [Sensitizing dye]

The sensitizing dye can be used without particular limitation as far as it absorbs light at the image exposure to form the excited state and provides energy to the polymerization initiator described above with electron transfer, energy transfer or heat generation thereby improving the polymerization initiation function. Particularly, a sensitizing dye having an absorption maximum in a wavelength range from 350 to 450 nm or from 750 to 1,400 nm is preferably used.

Examples of the sensitizing dye having an absorption maximum in a wavelength range from 350 to 450 nm include merocyanine dyes, benzopyranes, coumarins, aromatic ketones and anthracenes.

Of the sensitizing dyes having an absorption maximum in a wavelength range from 350 to 450 nm, a dye represented by formula (I) shown below is more preferable in view of high sensitivity.

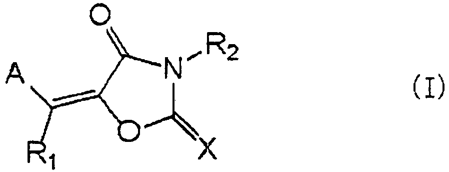

In formula (I), A represents an aromatic cyclic group which may have a substituent or a heterocyclic group which may have a substituent, X represents an oxygen atom, a sulfur atom or =N(R₃), and R₁, R₂ and R₃ each independently represents a monovalent non-metallic atomic group, or A and R₁ or R₂ and R₃ may be combined with each other to form an aliphatic or aromatic ring.

The formula (I) will be described in more detail below. R₁, R₂ and R₃ each independently represents a monovalent non-metallic atomic group, preferably a substituted or unsubstituted alkyl group, a substituted or unsubstituted alkenyl group, a substituted or unsubstituted aryl group, a substituted or unsubstituted aromatic heterocyclic residue, a substituted or unsubstituted alkoxy group, a substituted or unsubstituted alkylthio group, a hydroxy group or a halogen atom.

Now, A in formula (I) is described below. A represents an aromatic cyclic group which may have a substituent or a heterocyclic group which may have a substituent. The aromatic cyclic group which may have a substituent and heterocyclic group which may have a substituent are same as the substituted or unsubstituted aryl group and substituted or unsubstituted aromatic heterocyclic residue described for any one of R₁, R₂ and R₃ in formula (I), respectively.

Specific examples of the sensitizing dye include compounds described in Paragraph Nos. [0047] to [0053] of JP-A-2007-58170.

Further, sensitizing dyes represented by formulae (II) or (III) shown below can also be used.

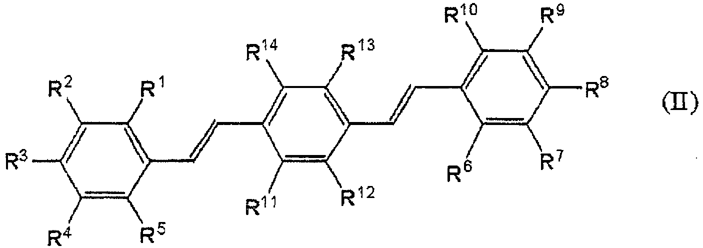

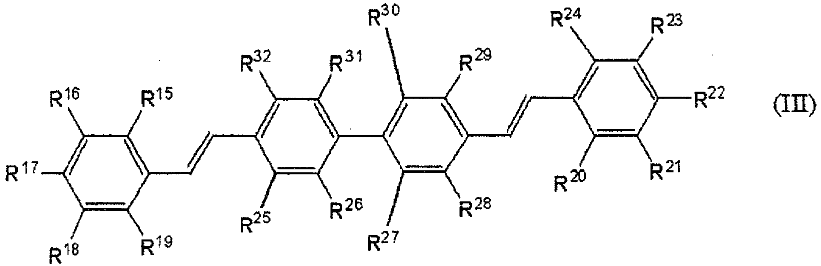

In formula (II), R¹ to R¹⁴ each independently represents a hydrogen atom, an alkyl group, an alkoxy group, a cyano group or a halogen atom, provided that at least one of R¹ to R¹⁰ represents an alkoxy group having 2 or more carbon atoms.

In formula (III), R¹⁵ to R³² each independently represents a hydrogen atom, an alkyl group, an alkoxy group, a cyano group or a halogen atom, provided that at least one of R¹⁵ to R²⁴ represents an alkoxy group having 2 or more carbon atoms.

As specific examples of these sensitizing dyes, compounds described in EP-A-1349006 and WO 2005/029187 are preferably used.

Further, sensitizing dyes described in JP-A-2007-171406, JP-A-2007-206216, JP-A-2007-206217, JP-A-2007-225701, JP-A-2007-225702, JP-A-2007-316582 and JP-A-2007-328243 are also preferably used.

Next, the sensitizing dye having an absorption maximum in a wavelength range from 750 to 1,400 (hereinafter, also referred to as an "infrared absorbing agent") preferably used in the invention is described in detail below. The infrared absorbing agent used is preferably a dye or pigment.

As the dye, commercially available dyes and known dyes described in literatures, for example, Senryo Binran (Dye Handbook) compiled by The Society of Synthetic Organic Chemistry, Japan (1970) can be used. Specifically, the dyes includes azo dyes, metal complex azo dyes, pyrazolone azo dyes, naphthoquinone dyes, anthraquinone dyes, phthalocyanine dyes, carbonium dyes, quinoneimine dyes, methine dyes, cyanine dyes, squarylium dyes, pyrylium salts and metal thiolate complexes.

Of the dyes, cyanine dyes, squarylium dyes, pyrylium dyes, nickel thiolate complexes and indolenine cyanine dyes are particularly preferred. The cyanine dyes and indolenine cyanine dyes are more preferred. As particularly preferable examples of the dye, a cyanine dye represented by formula (a) shown below is exemplified.

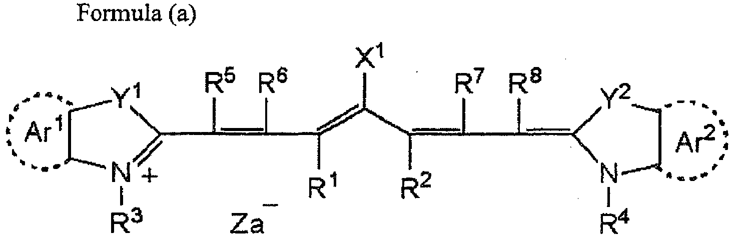

In formula (a), X¹ represents a hydrogen atom, a halogen atom, -NPh₂, -X²-L¹ or a group shown below. X² represents an oxygen atom, a nitrogen atom or a sulfur atom, L¹ represents a hydrocarbon group having from 1 to 12 carbon atoms, an aromatic cyclic group containing a hetero atom (a nitrogen atom, a sulfur atom, an oxygen atom, a halogen atom or a selenium atom) or a hydrocarbon group having from 1 to 12 carbon atoms and containing a hetero atom. Xa⁻ has the same meaning as Za⁻ defined hereinafter. R^{a} represents a hydrogen atom or a substituent selected from an alkyl group, an aryl group, a substituted or unsubstituted amino group and a halogen atom.

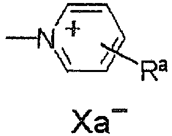

R¹ and R² each independently represents a hydrocarbon group having from 1 to 12 carbon atoms. In view of the preservation stability of a coating solution for image-recording layer, it is preferred that R¹ and R² each represents a hydrocarbon group having two or more carbon atoms. It is also preferred that R¹ and R² are combined with each other to form a ring, and in case of forming the ring, to form a 5-membered ring or 6-membered ring is particularly preferred.

Ar¹ and Ar², which may be the same or different, each represents an aromatic hydrocarbon group which may have a substituent. Preferable examples of the aromatic hydrocarbon group include a benzene ring group and a naphthalene ring group. Preferable examples of the substituent include a hydrocarbon group having 12 or less carbon atoms, a halogen atom and an alkoxy group having 12 or less carbon atoms. Y¹ and Y², which may be the same or different, each represents a sulfur atom or a dialkylmethylene group having 12 or less carbon atoms. R³ and R⁴, which may be the same or different, each represents a hydrocarbon group having 20 or less carbon atoms, which may have a substituent. Preferable examples of the substituent include an alkoxy group having 12 or less carbon atoms, a carboxyl group and a sulfo group, R⁵, R⁶, R⁷ and R⁸, which may be the same or different, each represents a hydrogen atom or a hydrocarbon group having 12 or less carbon atoms. In view of the availability of raw materials, a hydrogen atom is preferred. Za⁻ represents a counter anion. However, Za⁻ is not necessary when the cyanine dye represented by formula (a) has an anionic substituent in the structure thereof and neutralization of charge is not needed. Preferable examples of the counter ion for Za⁻ include a halide ion, a perchlorate ion, a tetrafluoroborate ion, a hexafluorophosphate ion and a sulfonate ion, and particularly preferable examples thereof include a perchlorate ion, a hexafluorophosphate ion and an arylsulfonate ion in view of the preservation stability of a coating solution for image-recording layer.

Specific examples of the cyanine dye represented by formula (a), which can be preferably used in the invention, include those described in Paragraph Nos. [0017] to [0019] of JP-A-2001-133969.

Further, other particularly preferable examples include specific indolenine cyanine dyes described in JP-A-2002-278057.

Examples of the pigment for use in the invention include commercially available pigments and pigments described in Colour Index (C.I.), Saishin Ganryo Binran (Handbook of the Newest Pigments) compiled by Pigment Technology Society of Japan (1977), Saishin Ganryo Oyou Gijutsu (Newest Application on Technologies for Pigments), CMC Publishing Co., Ltd. (1986) and Insatsu Ink Giiutsu (Printing Ink Technology), CMC Publishing Co., Ltd. (1984).

The amount of the sensitizing dye added is preferably from 0.05 to 30 parts by weight, more preferably from 0.1 to 20 parts by weight, most preferably from 0.2 to 10 parts by weight, per 100 parts by weight of the total solid content of the image-recording layer.

The infrared absorbing dyes may be used only one kind or in combination of two or more kinds thereof and the infrared absorbing dye may also be used together with an infrared absorbing agent other than the infrared absorbing dye, for example, a pigment. As the pigment, compounds described in Paragraph Nos. [0072] to [0076] of JP-A-2008-195018 are preferred.

The content of the infrared absorbing dye in the image-recording layer according to the invention is preferably from 0.1 to 10.0% by weight, more preferably from 0.5 to 5.0% by weight, based on the total solid content of the image-recording layer.

### [Hydrophobilizing precursor]

According to the invention, a hydrophobilizing precursor can be used in order to improve the on-press development property. The hydrophobilizing precursor for use in the invention is a fine particle capable of converting the image-recording layer to be hydrophobic when heat is applied. The fine particle is preferably at least one fine particle selected from hydrophobic thermoplastic polymer fine particle, thermo-reactive polymer fine particle, polymer fine particle having a polymerizable group, microcapsule having a hydrophobic compound encapsulated and microgel (crosslinked polymer fine particle). Among them, polymer fine particle having a polymerizable group and microgel are preferred.

As the hydrophobic thermoplastic polymer fine particle, hydrophobic thermoplastic polymer fine particles described, for example, in Research Disclosure, No. 33303, January (1992), JP-A-9-123387, JP-A-9-131850, JP-A-9-171249, JP-A-9-171250 and European Patent 931,647 are preferably exemplified.

Specific examples of the polymer constituting the polymer fine particle include a homopolymer or copolymer of a monomer, for example, ethylene, styrene, vinyl chloride, methyl acrylate, ethyl acrylate, methyl methacrylate, ethyl methacrylate, vinylidene chloride, acrylonitrile, vinyl carbazole or an acrylate or methacrylate having a polyalkylene structure and a mixture thereof Among them, polystyrene, a copolymer containing styrene and acrylonitrile and polymethyl methacrylate are more preferred.

The average particle size of the hydrophobic thermoplastic polymer fine particle for use in the invention is preferably from 0.01 to 2.0 µm.

The thermo-reactive polymer fine particle for use in the invention includes polymer fine particle having a thermo-reactive group and forms a hydrophobilized region by crosslinkage due to thermal reaction and change in the functional group involved therein.

As the thermo-reactive group of the polymer fine particle having a thermo-reactive group for use in the invention, although a functional group performing any reaction can be used as long as a chemical bond is formed, a polymerizable group is preferred. For instance, an ethylenically unsaturated group (for example, an acryloyl group, a methacryloyl group, a vinyl group or an allyl group) performing a radical polymerization reaction, a cationic polymerizable group (for example, a vinyl group, a vinyloxy group, an epoxy group or an oxetanyl group), an isocyanate group performing an addition reaction or a blocked form thereof, an epoxy group, a vinyloxy group and a functional group having an active hydrogen atom (for example, an amino group, a hydroxy group or a carboxyl group) as the reaction partner thereof, a carboxyl group performing a condensation reaction and a hydroxyl group or an amino group as the reaction partner thereof, and an acid anhydride performing a ring opening addition reaction and an amino group or a hydroxyl group as the reaction partner thereof are preferably exemplified.

As the microcapsule for use in the invention, microcapsule having all or part of the constituting components of the image-recording layer encapsulated as described, for example, in JP-A-2001-277740 and JP-A-2001-277742 is exemplified. The constituting components of the image-recording layer may be present outside the microcapsules. It is a more preferable embodiment of the image-recording layer containing microcapsules that hydrophobic constituting components are encapsulated in microcapsules and hydrophilic components are present outside the microcapsules.

The image-recording layer for use in the invention may be an embodiment containing a crosslinked resin particle, that is, a microgel. The microgel can contain a part of the constituting components of the image-recording layer at least one of in the inside and on the surface thereof. Particularly, an embodiment of a reactive microgel containing a radical polymerizable group on the surface thereof is preferred in view of the image-forming sensitivity and printing durability.

As a method of nucroencapsulation or microgelation of the constituting components of the image-recording layer, known methods can be used.

The average particle size of the microcapsule or microgel is preferably from 0.01 to 3.0 µm, more preferably from 0.05 to 2.0 µm, particularly preferably from 0.10 to 1.0 µm. In the range described above, good resolution and good time lapse stability can be achieved.

The content of the hydrophobilizing precursor is preferably in a range from 5 to 90% by weight based on the total solid content of the image-recording layer.

### <(G) Other components>

The image-recording layer for use in the invention may further contain other components, if desired.

### [Hydrophilic low molecular weight compound]

The image-recording layer according to the invention may contain a hydrophilic low molecular weight compound in order to improve the on-press development property without accompanying the decrease in the printing durability.

The hydrophilic low molecular weight compound includes a water-soluble organic compound, for example, a glycol compound, e.g., ethylene glycol, diethylene glycol, triethylene glycol, propylene glycol, dipropylene glycol or tripropylene glycol, or an ether or ester derivative thereof, a polyol compound, e.g., glycerine, pentaerythritol or tris(2-hydroxyethyl) isocyanurate, an organic amine compound, e.g., triethanol amine, diethanol amine or monoethanol amine, or a salt thereof, an organic sulfonic acid compound, e.g., an alkyl sulfonic acid, toluene sulfonic acid or benzene sulfonic acid, or a salt thereof, an organic sulfamic acid compound, e.g., an alkyl sulfamic acid, or a salt thereof, an organic sulfuric acid compound, e.g., an alkyl sulfuric acid or an alkyl ether sulfuric acid, or a salt thereof, an organic phosphonic acid compound, e.g., phenyl phosphonic acid, or a salt thereof, an organic carboxylic acid, e.g., tartaric acid, oxalic acid, citric acid, malic acid, lactic acid, gluconic acid or an amino acid, or a salt thereof and a betaine compound.

According to the invention, it is preferred to incorporate at least one compound selected from a polyol compound, an organic sulfate compound, an organic sulfonate compound and a betaine compound into the image-recording layer.

Specific examples of the organic sulfonate compound include an alkylsulfonate, for example, sodium n-butylsulfonate, sodium n-hexylsulfonate, sodium 2-ethylhexylsulfonate, sodium cyclohexylsulfonate or sodium n-octylsulfonate; an alkylsulfonate containing an ethylene oxide chain, for example, sodium 5,8,11-trioxapentadecane-1-sulfonate, sodium 5,8,11-trioxaheptadecane-1-sulfonate, sodium 13-ethyl-5,8,11-trioxaheptadecane-1-sulfonate or sodium 5,8,11,14-tetraoxatetracosane-1-sulfonate; an arylsulfonate, for example, sodium benzenesulfonate, sodium p-toluenesulfonate, sodium p-hydroxybenzenesulfonate, sodium p-styrenesulfonate, sodium isophthalic acid dimethyl-5-sulfonate, sodium 1-naphtylsulfonate, sodium 4-hydroxynaphtylsulfonate, disodium 1,5-naphthalenedisulfonate or trisodium 1,3,6-naphthalenetrisulfonate, and compounds described in Paragraph Nos. [0026] to [0031] of JP-A-2007-276454 and Paragraph Nos. [0020] to [0047] of JP-A-2009-154525. The salt may also be potassium salt or lithium salt.

The organic sulfate compound includes a sulfate of alkyl, alkenyl, alkynyl, aryl or heterocyclic monoether of polyethylene oxide. The number of ethylene oxide unit is preferably from 1 to 4. The salt is preferably a sodium salt, a potassium salt or a lithium salt. Specific examples thereof include compounds described in Paragraph Nos. [0034] to [0038] of JP-A-2007-276454.

As the betaine compound, a compound wherein a number of carbon atoms included in a hydrocarbon substituent on the nitrogen atom is from 1 to 5 is preferred. Specific examples thereof include trimethylammonium acetate, dimethylpropylammonium acetate, 3-hydroxy-4-trimethylammoniobutyrate, 4-(1-pyridinio)butyrate, 1-hydroxyethyl-1-imidazolioacetate, trimethylammonium methanesulfonate, dimethylpropylammonium methanesulfonate, 3-trimethylammonio-1-porpanesulfonate and 3-(1-pyridinio)-1-porpanesulfonate.

Since the hydrophilic low molecular weight compound has a small structure of hydrophobic portion and almost no surface active function, degradations of the hydrophobicity and film strength in the image area due to penetration of dampening water into the exposed area (image area) of the image-recording layer are prevented and thus, the ink receptive-property and printing durability of the image-recording layer can be preferably maintained.

The amount of the hydrophilic low molecular weight compound added to the image-recording layer is preferably from 0.5 to 20% by weight, more preferably from 1 to 15% by weight, still more preferably from 2 to 10% by weight, based on the total solid content of the image-recording layer. In the range described above, good on-press development property and printing durability are obtained.

The hydrophilic low molecular weight compounds may be used individually or as a mixture of two or more thereof.

### [Oil-sensitizing agent]

In order to improve the ink-receptive property, an oil-sensitizing agent, for example, a phosphonium compound, a nitrogen-containing low molecular weight compound or an ammonium group-containing polymer can be used in the image-recording layer. In particular, in the case where an inorganic stratiform compound is incorporated into the protective layer described hereinafter, the oil-sensitizing agent functions as a surface covering agent of the inorganic stratiform compound and prevents deterioration of the ink-receptive property during printing due to the inorganic stratiform compound.

As preferable examples of the phosphonium compound, phosphonium compounds described in JP-A-2006-297907 and JP-A-2007-50660 are exemplified. Specific examples of the phosphonium compound include tetrabutylphosphonium iodide, butyltriphenylphosphonium bromide, tetraphenylphosphonium bromide, 1,4-bis(triphenylphosphonio)butane di(hexafluorophosphate), 1,7-bis(triphenylphosphonio)heptane sulfate and 1,9-bis(triphenylphosphonio)nonane naphthalene-2,7-disulfonate.

As the nitrogen-containing low molecular weight compound, an amine salt and a quaternary ammonium salt are exemplified. Also, an imidazolinium salt, a benzimidazolinium salt, a pyridinium salt and a quinolinium salt are exemplified. Of the nitrogen-containing low molecular weight compounds, the quaternary ammonium salt and pyridinium salt are preferably used. Specific examples the nitrogen-containing low molecular weight compound include tetramethylammonium hexafluorophosphate, tetrabutylammonium hexafluorophosphate, dodecyltrimethylammonium p-toluenesulfonate, benzyltriethylammonium hexafluorophosphate, benzyldimethyloctylammonium hexafluorophosphate, benzyldimethyldodecylammonium hexafluorophosphate and compounds described in Paragraph Nos. [0021] to [0037] of JP-A-2008-284858 and Paragraph Nos. [0030] to [0057] of JP-A-2009-90645.

The ammonium group-containing polymer may be any polymer containing an ammonium group in its structure and is preferably a polymer containing from 5 to 80% by mole of (meth)acrylate having an ammonium group in its side chain as a copolymerization component. Specific examples thereof include polymers described in Paragraph Nos. [0089] to [0105] of JP-A-2009-208458.

As to the ammonium group-containing polymer, its reduced specific viscosity value (unit: ml/g) determined according to the measuring method described below is preferably from 5 to 120, more preferably from 10 to 110, particularly preferably from 15 to 100. When the reduced specific viscosity value described above is calculated in terms of weight average molecular weight (Mw), from 10,000 to 150,000 is preferred, from 17,000 to 140,000 is more preferred, and 20,000 to 130,000 is particularly preferred.

### <Measuring method of reduced specific viscosity>

In a 20 ml measuring flask was weighed 1.0 g of polymer and the measuring flask was filled up to the gauge line with N-methyl pyrrolidone. The resulting solution was allowed to stand in a thermostatic bath of 30°C for 30 minutes and put into an Ubbelohde viscometer (viscometer constant: 0.010 cSt/s) and a period for running down of the solution at 30°C was measured. The measurement was conducted twice for the same sample and an average value of the measurement was determined. The measurement was also conducted for a blank (only N-methyl pyrrolidone) in the same manner. The reduced specific viscosity was calculated according to the formula shown below. $Reduced specific viscosity \left(ml/g\right) = \frac{\frac{Period for running down of sample solution \left(sec\right) - Period for running down of blank \left(sec\right)}{Period for running down of blank \left(sec\right)}}{\frac{1.0 \left(g\right)}{20 \left(ml\right)}}$

Specific examples of the ammonium group-containing polymer are set forth below.
(1) 2-(Trimethylammonio)ethyl methacrylate p-toluenesulfonate/3,6-dioxaheptyl methacrylate copolymer (molar ratio: 10/90, Mw: 45,000)
(2) 2-(Trimethylammonio)ethyl methacrylate hexafluorophosphate /3,6-dioxaheptyl methacrylate copolymer (molar ratio: 20/80, Mw: 60,000)
(3) 2-(Ethyldimethylammonio)ethyl methacrylate p-toluenesulfonate/hexyl methacrylate copolymer (molar ratio: 30/70, Mw: 45,000)
(4) 2-(Trimethylammonio)ethyl methacrylate hexafluorophosphate /2-ethylhexyl methacrylate copolymer (molar ratio: 20/80, Mw: 60,000)
(5) 2-(Trimethylammonio)ethyl methacrylate methylsulfate/hexyl methacrylate copolymer (molar ratio: 40/60, Mw: 70,000)
(6) 2-(Butyldimethylammonio)ethyl methacrylate hexafluorophosphate/3,6-dioxaheptyl methacrylate copolymer (molar ratio: 25/75, Mw: 65,000)
(7) 2-(Butyldimethylammonio)ethyl acrylate hexafluorophosphate/3,6-dioxaheptyl methacrylate copolymer (molar ratio: 20/80, Mw: 65,000)
(8) 2-(Butyldimethylammonio)ethyl methacrylate 13-ethyl-5,8,11-trioxa-1-heptadecanesulfonate/3,6-dioxaheptyl methacrylate copolymer (molar ratio: 20/80, Mw: 75,000)
(9) 2-(Butyldimethylammonio)ethyl methacrylate hexafluorophosphate/3,6-dioxaheptyl methacrylate/2-hydroxy-3-methacryloyloaypropyl methacrylate copolymer (molar ratio: 15/80/5, Mw: 65,000)

The content of the oil-sensitizing agent is preferably from 0.01 to 30.0% by weight, more preferably from 0.1 to 15.0% by weight, still more preferably from 1 to 10% by weight, based on the total solid content of the image-recording layer.

### (3) Others

Other components, for example, a surfactant, a coloring agent, a print-out agent, a polymerization inhibitor, a higher fatty acid derivative, a plasticizer, a fine inorganic particle, an inorganic stratiform compound, a co-sensitizer or a chain transfer agent may further be added to the image-recording layer. Specifically, compounds and amounts added thereof described, for example, in Paragraph Nos. [0114] to [0159] of JP-A-2008-284817, Paragraph Nos. [0023] to [0027] of JP-A-2006-91479 and Paragraph No. [0060] of U.S. Patent Publication No. 2008/0311520 are preferably used.

### (H) Formation of image-recording layer

The image-recording layer for use in the invention is formed by dispersing or dissolving each of the necessary constituting components described above in a solvent to prepare a coating solution and coating the solution on a support by a known method, for example, bar coater coating and drying as described in Paragraph Nos. [0142] to [0143] of JP-A-2008-195018. The coating amount (solid content) of the image-recording layer formed on a support after coating and drying may be varied according to the intended purpose but is in general preferably from 0.3 to 3.0 g/m². In the range described above, good sensitivity and good film property of the image-recording layer can be obtained.

### (Undercoat layer)

In the lithographic printing plate precursor according to the invention, an undercoat layer (also referred to as an intermediate layer) is preferably provided between the image-recording layer and the support. The undercoat layer strengthens adhesion between the support and the image-recording layer in the exposed area and makes removal of the image-recording layer from the support easy in the unexposed area, thereby contributing improvement in the developing property without accompanying degradation of the printing durability. Further, it is advantageous that in the case of infrared laser exposure, since the undercoat layer acts as a heat insulating layer, decrease in sensitivity due to diffusion of heat generated upon the exposure into the support is prevented.

As a compound for use in the undercoat layer, a compound having an adsorbing group capable of adsorbing to a surface of support and a crosslinkable group for improving an adhesion property to the image-recording layer is preferred. Further, a compound having a hydrophilicity-imparting group, for example, a sulfo group is also exemplified as a preferable compound. The compound may be a low molecular weight compound or a polymer compound. The compounds may be used in mixture of two or more thereof, if desired.

As the polymer compound, a copolymer of a monomer having an adsorbing group, a monomer having a hydrophilic group and a monomer having a crosslinkable group is preferred. As the adsorbing group capable of adsorbing to a surface of support, a phenolic hydroxy group, a carboxyl group, -PO₃H₂, -OPO₃H₂, -CONHSO₂- -SO₂NHSO₂- or -COCH₂COCH₃ is preferred. As the hydrophilic group, a sulfo group is preferred. As the crosslinkable group, for example, a methacryl group or an allyl group is preferred. The polymer compound may contain a crosslinkable group introduced by a salt formation between a polar substituent of the polymer compound and a compound containing a substituent having a counter charge to the polar substituent of the polymer compound and an ethylenically unsaturated bond and also may be further copolymerized with a monomer other than those described above, preferably a hydrophilic monomer.

Specifically, a silane coupling agent having an addition-polymerizable ethylenic double bond reactive group described in JP-A-10-282679 and a phosphorus compound having an ethylenic double bond reactive group described in JP-A-2-304441 are preferably exemplified. Low molecular weight compounds or polymer compounds having a crosslinkable group (preferably an ethylenically unsaturated bond group), a functional group capable of interacting with a surface of support and a hydrophilic group described in JP-A-2005-238816, JP-A-2005-125749, JP-A-2006-239867 and JP-A-2006-215263 are also preferably used.

Polymer compounds having an adsorbing group capable of adsorbing to a surface of support, a hydrophilic group and a crosslinkable group described in JP-A-2005-125749 and JP-A-2006-188038 are more preferred.

The content of the unsaturated double bond in the polymer compound for undercoat layer is preferably from 0.1 to 10.0 mmol, most preferably from 0.2 to 5.5 mmol, based on 1 g of the polymer compound.

The weight average molecular weight of the polymer compound for undercoat layer is preferably 5,000 or more, and more preferably from 10,000 to 300,000.

The undercoat layer according to the invention may contain a chelating agent, a secondary or tertiary amine, a polymerization inhibitor or a compound containing an amino group or a functional group having polymerization inhibition ability and a group capable of interacting with a surface of aluminum support (for example, 1,4-diazabicyclo[2,2,2]octane (DABCO), 2,3,5,6-tetrahydroxy-p-quinone, chloranil, sulfophthalic acid, hydroxyethylethylenediaminetriacetic acid, dihydroxyethylethylenediaminediacetic acid or hydroxyethyliminodiacetic acid) in addition to the compound for the undercoat layer described above in order to prevent the occurrence of stain due to the lapse of time.

The undercoat layer is coated according to a known method. The coating amount (solid content) of the undercoat layer is preferably from 0.1 to 100 mg/m², and more preferably from 1 to 30 mg/m².

### (Support)

As the support for use in the lithographic printing plate precursor according to the invention, a known support is used. Particularly, an aluminum plate subjected to roughening treatment and anodizing treatment according to a known method is preferred.

Also, an enlarging treatment or a sealing treatment of micropores of the anodized film described in JP-A-2001-253181 and JP-A-2001-322365 or a surface hydrophilizing treatment, for example, with an alkali metal silicate as described in U.S. Patents 2,714,066, 3,181,461, 3,280,734 and 3,902,734 or polyvinyl phosphonic acid as described in U.S. Patents 3,276,868, 4,153,461 and 4,689,272 may be appropriately selected and applied to the aluminum plate, if desired.

The support preferably has a center line average roughness from 0.10 to 1.2 µm.

The support according to the invention may have a backcoat layer containing an organic polymer compound described in JP-A-5-45885 or an alkoxy compound of silicon described in JP-A-6-35174, provided on the back surface thereof, if desired.

### (Protective layer)

In the lithographic printing plate precursor according to the invention, it is preferred to provide a protective layer (overcoat layer) on the image-recording layer. The protective layer has a function for preventing, for example, occurrence of scratch in the image-recording layer or ablation caused by exposure with a high illuminance laser beam, in addition to the function for restraining an inhibition reaction against the image formation by means of oxygen blocking.

With respect to the protective layer having such properties, there are described, for example, in U.S. Patent 3,458,311 and JP-B-55-49729. As a polymer having low oxygen permeability for use in the protective layer, any water-soluble polymer and water-insoluble polymer can be appropriately selected to use. The polymers may be used in mixture of two or more thereof, if desired. Specifically, for example, polyvinyl alcohol, a modified polyvinyl alcohol, polyvinyl pyrrolidone, a water-soluble cellulose derivative and poly(meth)acrylonitrile are exemplified.

As the modified polyvinyl alcohol, an acid-modified polyvinyl alcohol having a carboxylic group or a sulfonic group is preferably used. Specifically, modified polyvinyl alcohols described in JP-A-2005-250216 and JP-A-2006-259137 are preferably exemplified.

It is also preferred for the protective layer to contain an inorganic stratiform compound, for example, natural mica or synthetic mica as described in JP-A-2005-119273 in order to increase the oxygen blocking property.

Further, the protective layer may contain a known additive, for example, a plasticizer for imparting flexibility, a surfactant for improving a coating property or a fine inorganic particle for controlling a surface slipping property. The oil-sensitizing agent described with respect to the image-recording layer may also be incorporated into the protective layer.

The protective layer is coated according to a known method. The coating amount of the protective layer is preferably in a range from 0.01 to 10 g/m², more preferably in a range from 0.02 to 3 g/m², most preferably in a range from 0.02 to 1 g/m², in terms of the coating amount after drying.

### [Plate making method]

Plate making of the lithographic printing plate precursor according to the invention is preferably performed by an on-press development method. The on-press development method includes a step in which the lithographic printing plate precursor is imagewise exposed and a printing step in which oily ink and an aqueous component are supplied to the exposed lithographic printing plate precursor without undergoing any development processing to perform printing, and it is characterized in that the unexposed area of the lithographic printing plate precursor is removed in the course of the printing step. The imagewise exposure may be performed on a printing machine after the lithographic printing plate precursor is mounted on the printing machine or may be separately performed using a platesetter or the like. In the latter case, the exposed lithographic printing plate precursor is mounted as it is on a printing machine without undergoing a development processing step. Then, the printing operation is initiated using the printing machine with supplying oily ink and an aqueous component and at an early stage of the printing the on-press development is carried out. Specifically, the image-recording layer in the unexposed area is removed and the hydrophilic surface of support is revealed therewith to form the non-image area. As the oily ink and aqueous component, printing ink and dampening water for conventional lithographic printing can be employed, respectively.

The plate making method is described in more detail below.

As the light source used for the image exposure in the invention, a laser is preferred. The laser for use in the invention is not particularly restricted and preferably includes, for example, a solid laser or semiconductor laser emitting an infrared ray having a wavelength from 760 to 1,200 nm.

With respect to the infrared ray laser, the output is preferably 100 mW or more, the exposure time per pixel is preferably within 20 microseconds, and the irradiation energy is preferably from 10 to 300 mJ/cm². With respect to the laser exposure, in order to shorten the exposure time, it is preferred to use a multibeam laser device.

The exposed lithographic printing plate precursor is mounted on a plate cylinder of a printing machine. In case of using a printing machine equipped with a laser exposure apparatus, the lithographic printing plate precursor is mounted on a plate cylinder of the printing machine and then subjected to the imagewise exposure.

### <Method of developing with developer having pH from 2 to 11>

According to a conventional developing process using an alkali developer as the method (1), a protective layer is removed in a pre-water washing step, the alkali development is conducted, the alkali is removed by washing with water in a post-water washing step, gum solution treatment is conducted and drying is conducted in a drying step. On the contrary, in the case of conducting the development of the lithographic printing plate precursor according to the invention using a developer having pH from 2 to 11, the protective layer and the unexposed area of the image-recording layer are together removed so that the resulting lithographic printing plate can be immediately mounted on a printing machine to perform printing. By incorporating a surfactant and/or a water-soluble polymer of oil-desensitization property into such a developer having pH from 2 to 11, the development and gum solution treatment are conducted at the same time so that the post-water washing step is not particularly necessary and after conducting the development and gum solution treatment with one solution, the drying step can be performed. It is preferred that after the development and gum treatment, the excess developer is removed using a squeeze roller, followed by conducting the drying. Specifically, a considerably simplified processing process (gum development) composed of development and gum treatment with one solution and drying can be conducted.

The development according to the invention is performed at liquid temperature ordinarily from 0 to 60°C, preferably from 15 to 40°C, using, for example, a method wherein the imagewise exposed lithographic printing plate precursor is immersed in the developer and rubbed with a brush or a method wherein the developer is sprayed to the imagewise exposed lithographic printing plate precursor and the exposed lithographic printing plate precursor is rubbed with a brush.

The developer having pH from 2 to 11 is preferably an aqueous solution containing water as a main component (containing 60% by weight or more of water based on weight of the developer). In particular, an aqueous solution containing a surfactant (for example, an anionic, nonionic, cationic or amphoteric surfactant) or an aqueous solution containing a water-soluble polymer is preferred. An aqueous solution containing both the surfactant and the water-soluble polymer is also preferred. The pH of the developer is more preferably from 5 to 10.7, still more preferably from 6 to 10.5, and most preferably from 7.5 to 10.3.

The anionic surfactant for use in the developer is not particularly limited and includes, for example, fatty acid salts, abietic acid salts, hydroxyalkanesulfonic acid salts, alkanesulfonic acid salts, dialkylsulfosuccinic acid salts, straight-chain alkylbenzenesulfonic acid salts, branched alkylbenzenesulfonic acid salts, alkylnaphthalenesulfonic acid salts, alkyldiphenylether (di)sulfonic acid salts, alkylphenoxy polyoxyethylene propylsulfonic acid salts, polyoxyethylene alkylsulfophenyl ether salts, N-alkyl-N-oleyltaurine sodium salt, N-alkylsulfosuccinic acid monoamide disodium salts, petroleum sulfonic acid salts, sulfated castor oil, sulfated beef tallow oil, sulfate ester slats of fatty acid alkyl ester, alkyl sulfate ester salts, polyoxyethylene alkyl ether sulfate ester salts, fatty acid monoglyceride sulfate ester salts, polyoxyethylene alkyl phenyl ether sulfate ester salts, polyoxyethylene styryl phenyl ether sulfate ester salts, alkyl phosphate ester salts, polyoxyethylene alkyl ether phosphate ester salts, polyoxyethylene alkyl phenyl ether phosphate ester salts, partially saponified products of styrene-maleic anhydride copolymer, partially saponified products of olefin-maleic anhydride copolymer and naphthalene sulfonate formalin condensates. Of the compounds, alkylbenzenesulfonic acid salts, alkylnaphthalenesulfonic acid salts and alkyldiphenylether (di)sulfonic acid salts are particularly preferably used.

The cationic surfactant for use in the developer is not particularly limited and hitherto known cationic surfactants may be used. For example, alkylamine salts, quaternary ammonium salts, alkylimidazolinium salts, polyoxyethylene alkyl amine salts and polyethylene polyamine derivatives are exemplified.

The nonionic surfactant for use in the developer is not particularly limited and includes, for example, polyethylene glycol type higher alcohol ethylene oxide adducts, alkylphenol ethylene oxide adducts, alkylnaphthol ethylene oxide adducts, phenol ethylene oxide adducts, naphthol ethylene oxide adducts, fatty acid ethylene oxide adducts, polyhydric alcohol fatty acid ester ethylene oxide adducts, higher alkylamine ethylene oxide adducts, fatty acid amide ethylene oxide adducts, ethylene oxide addacts of fat, polypropylene glycol ethylene oxide adducts, dimethylsiloxane-ethylene oxide block copolymers, dimethylsiloxane-(propylene oxide-ethylene oxide) block copolymers, fatty acid esters of polyhydric alcohol type glycerol, fatty acid esters of pentaerythritol, fatty acid esters of sorbitol and sorbitan, fatty acid esters of sucrose, alkyl ethers of polyhydric alcohols and fatty acid amides of alkanolamines. Of the compounds, those having an aromatic ring and an ethylene oxide chain are preferred, and alkyl-substituted or unsubstituted phenol ethylene oxide adducts and alkyl-substituted or unsubstituted naphthol ethylene oxide adducts are more preferred.

The amphoteric surfactant for use in the developer is not particularly limited and includes, for instance, amine oxide type, for example, alkyldimethylamine oxide, betaine type, for example, alkyl betaine and amino acid type, for example, sodium salt of alkylamino fatty acid. In particular, an alkyldimethylamine oxide which may have a substituent, an alkyl carboxy betaine which may have a substituent and an alkyl sulfo betaine which may have a substituent are preferably used. Specific examples of the compound are described, for example, in Paragraph Nos. [0255] to [0278] of JP-A-2008-203359 and Paragraph Nos. [0028] to [0052] of JP-A-2008-276166. Specific examples of the more preferable compound include 2-alkyl-N-carboxymethyl-N-hydroxyethyl imidazolinium betaine, alkyldiaminoethylglycine hydrochloride, lauryldimethylaminoacetic acid betaine, N-lauric acid amidopropyldimethyl betaine and N-lauric acid amidopropyldimethylamine oxide.

Two or more surfactants may be used in combination. The content of the surfactant in the developer is preferably from 0.01 to 20% by weight, and more preferably from 0.1 to 10% by weight.

The water-soluble polymer for use in the developer having pH from 2 to 11 includes, for example, soybean polysaccharide, modified starch, gum arabic, dextrin, a cellulose derivative (for example, carboxymethyl cellulose, carboxyethyl cellulose or methyl cellulose) or a modified product thereof, pllulan, polyvinyl alcohol or a derivative thereof, polyvinyl pyrrolidone, polyacrylamide, an acrylamide copolymer, a vinyl methyl ether/maleic anhydride copolymer, a vinyl acetate/maleic anhydride copolymer and a styrene/maleic anhydride copolymer.

As the soybean polysaccharide, known soybean polysaccharide can be used. For example, as a commercial product, SOYAFIVE (trade name, produced by Fuji Oil Co., Ltd.) is available and various grade products can be used. The soybean polysaccharide preferably used is that having viscosity in a range from 10 to 100 mPa/sec in the 10% by weight aqueous solution thereof.

As the modified starch, known modified starch can be used. The modified starch can be prepared, for example, by a method wherein starch, for example, of corn, potato, tapioca, rice or wheat is decomposed, for example, with an acid or an enzyme to an extent that the number of glucose residue per molecule is from 5 to 30 and then oxypropylene is added thereto in an alkali.

Two or more water-soluble polymer compounds may be used in combination. The content of the water-soluble polymer in the developer is preferably from 0.1 to 20% by weight, and more preferably from 0.5 to 10% by weight.

Into the developer having pH from 2 to 11 for use in the invention, a pH buffer agent may further be incorporated.

As the pH buffer agent used in the invention, a pH buffer agent exhibiting a pH buffer function at pH from 2 to 11 is used without particular restriction. In the invention, a weak alkaline buffer agent is preferably used and includes, for example, (a) a carbonate ion and a hydrogen carbonate ion, (b) a borate ion, (c) a water-soluble amine compound and an ion of the water-soluble amine compound, and combinations thereof. Specifically, for example, (a) a combination of a carbonate ion and a hydrogen carbonate ion, (b) a borate ion, or (c) a combination of a water-soluble amine compound and an ion of the water-soluble amine compound exhibits a pH buffer function in the developer to prevent fluctuation of the pH even when the developer is used for a long period of time. As a result, for example, the deterioration of developing property resulting from the fluctuation of pH and the occurrence of development scum are restrained. The combination of a carbonate ion and a hydrogen carbonate ion is particularly preferred.

In order for a carbonate ion and a hydrogen carbonate ion to be present in the developer, a carbonate and a hydrogen carbonate may be added to the developer or a carbonate ion and a hydrogen carbonate ion may be generated by adding a carbonate or a hydrogen carbonate to the developer and then adjusting the pH. The carbonate or hydrogen carbonate used is not particularly restricted and it is preferably an alkali metal salt thereof. Examples of the alkali metal include lithium, sodium and potassium and sodium is particularly preferable. The alkali metals may be used individually or in combination of two or more thereof.

When the combination of (a) a carbonate ion and a hydrogen carbonate ion is adopted as the pH buffer agent, the total amount of the carbonate ion and hydrogen carbonate ion is preferably from 0.05 to 5 mole/l, more preferably from 0.1 to 2 mole/I, particularly preferably from 0.2 to 1 mole/I, in the developer.

The developer may contain an organic solvent. As the organic solvent to be contained, for example, an aliphatic hydrocarbon (e.g., hexane, heptane, Isopar E, Isopar H, Isopar G (produced by Esso Chemical Co., Ltd.)), an aromatic hydrocarbon (e.g., toluene or xylene), a halogenated hydrocarbon (methylene dichloride, ethylene dichloride, trichlene or monochlorobenzene) or a polar solvent is exemplified. Examples of the polar solvent include an alcohol (e.g., methanol, ethanol, propanol, isopropanol, 1-butanol, 1-pentanol, 1-hexanol, 1-heptanol, 1-octanol, 2-octanol, 2-ethyl-1-hexanol, 1-nonanol, 1-decanol, benzyl alcohol, ethylene glycol monomethyl ether, 2-ethyoxyethanol, diethylene glycol monoethyl ether, diethylene glycol monohexyl ether, triethylene glycol monomethyl ether, propylene glycol monoethyl ether, propylene glycol monomethyl ether, polyethylene glycol monomethyl ether, polypropylene glycol, tetraethylene glycol, ethylene glycol monobutyl ether, ethylene glycol monobenzyl ether, ethylene glycol monophenyl ether, propylene glycol monophenyl ether, methyl phenyl carbinol, n-amyl alcohol or methylamyl alcohol), a ketone (e.g., acetone, methyl ethyl ketone, ethyl butyl ketone, methyl isobutyl ketone or cyclohexanone), an ester (e.g., ethyl acetate, propyl acetate, butyl acetate, amyl acetate, benzyl acetate, methyl lactate, butyl lactate, ethylene glycol monobutyl acetate, polyethylene glycol monomethyl ether acetate, diethylene glycol acetate, diethyl phthalate or butyl levulinate) and others (e.g., triethyl phosphate, tricresyl phosphate, N-phenylethanolamine, N-phenyldiethanolamine, N-methyldiethanolamine, N-ethyldiethanolamine, 4-(2-hydroxyethyl)morpholine, N,N-dimethylacetamide or N-methylpyrrolidone).

Two or more organic solvents may be used in the developer.

Further, when the organic solvent is insoluble in water, it may be employed by being solubilized in water using a surfactant or the like. In the case where the developer contains an organic solvent, the concentration of the organic solvent is desirably less than 40% by weight in view of safety and inflammability.

The developer having pH from 2 to 11 may contain a preservative, a chelating agent, a defoaming agent, an organic acid, an inorganic acid, an inorganic salt or the like in addition the components described above. Specifically, compounds described in Paragraph Nos. [0266] to [0270] of JP-A-2007-206217 are preferably used.

The developer described above can be used as a developer and a development replenisher for the exposed lithographic printing plate precursor and it is preferably applied to an automatic processor described hereinafter. In the case of conducting the development processing using an automatic processor, the processing solution becomes fatigued in accordance with the processing amount, and hence the processing ability may be restored using a replenisher or a fresh developer.

The development processing using the developer having pH from 2 to 11 according to the invention is preferably performed by an automatic processor equipped with a supplying means for the developer and a rubbing member. An automatic processor using a rotating brush roll as the rubbing member is particularly preferred. Further, the automatic processor is preferably provided with a means for removing the excess developer, for example, a squeeze roller or a drying means, for example, a hot air apparatus, subsequently to the development processing means.

### <On-press development processing>

When dampening water and printing ink are supplied to the imagewise exposed lithographic printing plate precursor to perform printing, in the exposed area of the image-recording layer, the image-recording layer cured by the exposure forms the printing ink receptive area having the oleophilic surface. On the other hand, in the unexposed area, the uncured image-recording layer is removed by dissolution or dispersion with the dampening water and/or printing ink supplied to reveal the hydrophilic surface in the area. As a result, the dampening water adheres onto the revealed hydrophilic surface and the printing ink adheres onto the exposed area of the image-recording layer, whereby printing is initiated.

While either the dampening water or printing ink may be supplied at first on the surface of lithographic printing plate precursor, it is preferred to supply the printing ink at first in view of preventing the dampening water from contamination with the component of the image-recording layer removed.

Thus, the lithographic printing plate precursor according to the invention is subjected to the on-press development on an offset printing machine and used as it is for printing a large number of sheets.

### EXAMPLES

The present invention will be described in more detail with reference to the following examples, but the invention should not be construed as being limited thereto. With respect to the polymer compounds used in the examples, unless otherwise particularly defined, a molecular weight means a weight average molecular weight (Mw) and a ratio of repeating unit is indicated in mole percent.

### [Synthesis example of branched polymer compound according to invention]

Although the multi-branched type polymer (polymer compound according to the invention) for use in the invention can be synthesized by a known polymerization method, for example, a method comprising radical polymerization using a polymerization initiator and/or chain transfer agent containing a specific functional group in its molecule and then condensation of the resulting polymer with a polyfunctional compound having many functional groups capable of reacting with the specific functional group or a method of radical polymerization using a polyfunctional chain transfer agent, the method of radical polymerization using a polyfunctional chain transfer agent is particularly preferred from the standpoint of ease of synthesis. Synthesis examples of the multi-branched type polymer for use in the invention are described below.

### Synthesis of Polymer compound (A-1)

To 40.19 g of 1-methoxy-2-propanol heated at 70°C under nitrogen stream was dropwise added a mixed solution composed of 75.29 g of methoxypolyethylene glycol methacrylate (blemmer PME-100, produced by NOF Corp., repeating number of ethylene oxide: 2), 50.06 g of methyl methacrylate, 8.61 g of methacrylic acid, 1.752 g of tris(2-mercaptopropionyloxyethyl) isocyanurate, 1.151 g of a polymerization initiator (dimethyl-2,2'-azobis(2-methylpropionate), V-601, produced by Wako Pure Chemical Industries, Ltd.) and 160.75 g of 1-methoxy-2-propanol over a period of 2 hours and 30 minutes. After the completion of the dropwise addition, 0.115 g of V-601 was further added and the temperature was raised to 90°C, followed by continuing to react for 2 hours. After the reaction, the reaction solution was cooled to 50°C and diluted by adding 117.51 g of 1-methoxy-2-propanol. To the resulting reaction mixture were added a mixed solution composed of 0.783 g of 4-hydroxy-2,2,6,6-tetramethylpiperidine-1-oxide, free radical, 15.66 g of glycidyl methacrylate and 10.97 g of 1-methoxy-2-propanol, followed by stirring for 5 minutes. The reaction mixture was raised to 90°C and stirred for 10 minutes, then 1.79 g of tetraethylammonium bromide was added thereto and the tetraethylammonium bromide attached to the wall of the reaction vessel was washed with 24.58 g of 1-methoxy-2-propanol. After stirring at 90°C for 18 hours, 239.6 g of 1-methoxy-2-propanol was added thereto to dilute the reaction mixture. The Mw of the thus-obtained solution of Polymer compound (A-1) represented by the structural formula described hereinbefore measured by GPC was 44,000 and the solid content concentration was 24.5% by weight.

### Synthesis of Polymer compound (A-2)

To 40.61 g of 1-methoxy-2-propanol heated at 70°C under nitrogen stream was dropwise added a mixed solution composed of 75.29 g of blemmer PME-100, 60.07 g of methyl methacrylate, 1.75 g of tris(2-mercaptopropionyloxyethyl) isocyanurate, 1.15 g of V-601 (produced by Wako Pure Chemical Industries, Ltd.) and 162.43 g of 1-methoxy-2-propanol over a period of 2 hours and 30 minutes. After the completion of the dropwise addition, the reaction was further continued for 3 hours. After the reaction, the reaction mixture was poured into 4,000 g of water with well stirring to deposit a solid. The solid deposited was collected by filtration, washed with water and dried under a reduced pressure to obtain Polymer compound (A-2) represented by the structural formula described hereinbefore. The Mw of the polymer obtained was 50,000.

### Examples 1 and 2 and Comparative Examples 1 and 2

### [Preparation of Cured layers (1) and (2)]

### <Coating solutions (1) and (2)>

Coating solutions (1) and (2) having the composition shown below were coated on a polyethylene terephthalate (PET) film using a bar and dried in an oven at 100°C for 60 seconds to form layers having a dry coating amount of 1.0 g /m², respectively. Then, the layers were irradiated with UV light to obtain Cured layers (1) and (2), respectively.

### <Coating solution (1)>

| | |
|---|---|
| Polymer compound (A-1)(solid content concentration of 10% in mixed solvent of 1-methoxy-2-propanol/2-butanone (1/1)) | 2.4 g |
| Infrared absorbing dye (1) having structure shown below | 0.030 g |
| Polymerization initiator (1) having structure shown below | 0.162 g |
| Polymerizable compound (Tris(acryloyloxyethyl) isocyanurate (NK Ester A-9300, produced by Shin-Nakamura Chemical Co., Ltd.)) | 0.192 g |
| Mixed solvent of 1-methoxy-2-propanol/2-butanone (1/1) | 0.17 g |

### Infrared absorbing dye (1):

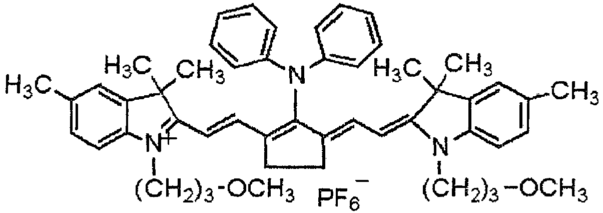

### Polymerization initiator (1):

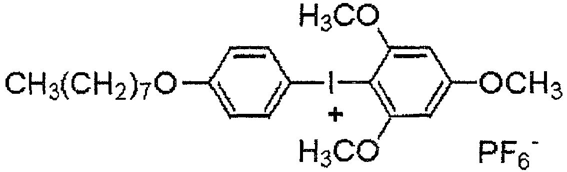

### <Coating solution (2)>

Cured layer (2) was prepared in the same manner as in Cured layer (1) except for changing Polymer compound (A-1) to Polymer compound (A-2). The Cured layer (2) obtained had a dry coating amount of 1.0 g /m².

### <Coating solutions (3) and (4)>

The cured layers were prepared in the same manner as in Cured layer (1) except for changing Polymer compound (A-1) to Straight-chain polymer (R-1) and Multi-branched polymer (R-2) shown below, respectively.

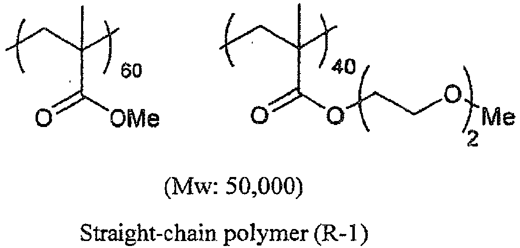

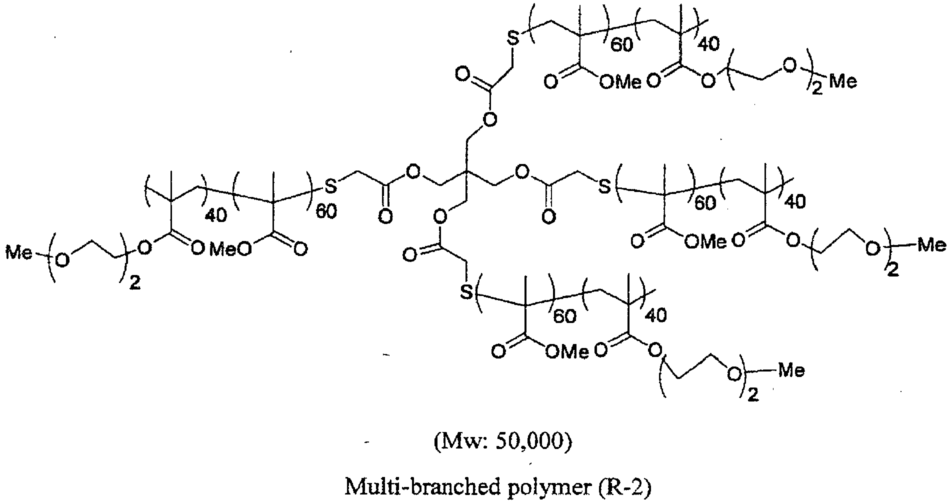

### [Evaluation of cured layer (evaluation of durability of layer)]

In order to evaluate the durability of the layer formed on PET, the surface of the layer was rubbed 100 times with nonwoven fabric (BEMCOT, produced by Asahi Kasei Fibers Corp.) and the surface of the layer before and after the rubbing was observed. The pressure applied at which the layer was peeled off or the scratches were recognized by visual observation was determined. The results obtained are shown in Table 4.

**TABLE 4: Evaluation Result of Cured Layer**

| | Cured Layer | Coating Solution | Polymer Compound Represented by Formula (1) or Comparative Compound | Pressure |
|---|---|---|---|---|
| Example 1 | (1) | (1) | A-1 | 100 g/m² |
| Example 2 | (2) | (2) | A-2 | 100 g/m² |
| Comparative Example 1 | (3) | (3) | R-1 | 70 g/m² |
| Comparative Example 2 | (4) | (4) | R-2 | 70 g/m² |

### Examples 3 to 11, 13 and 14 and Comparative Examples 3 to 6

### [Preparation of Lithographic printing plate precursors (1) to (7)]

### (1) Preparation of Support

An aluminum plate (material: JIS A 1050) having a thickness of 0.3 mm was subjected to a degreasing treatment at 50°C for 30 seconds using a 10% by weight aqueous sodium aluminate solution in order to remove rolling oil on the surface thereof and then grained the surface thereof using three nylon brushes embedded with bundles of nylon bristle having a diameter of 0.3 mm and an aqueous suspension (specific gravity: 1.1 g/cm³) of pumice having a median size of 25 µm, followed by thorough washing with water. The plate was subjected to etching by immersing in a 25% by weight aqueous sodium hydroxide solution of 45°C for 9 seconds, washed with water, then immersed in a 20% by weight aqueous nitric acid solution at 60°C for 20 seconds, and washed with water. The etching amount of the grained surface was about 3 g/m².

Then, using an alternating current of 60 Hz, an electrochemical roughening treatment was continuously carried out on the plate. The electrolytic solution used was a 1% by weight aqueous nitric acid solution (containing 0.5% by weight of aluminum ion) and the temperature of electrolytic solution was 50°C. The electrochemical roughening treatment was conducted using an alternating current source, which provides a rectangular alternating current having a trapezoidal waveform such that the time TP necessary for the current value to reach the peak from zero was 0.8 msec and the duty ratio was 1:1, and using a carbon electrode as a counter electrode. A ferrite was used as an auxiliary anode. The current density was 30 A/dm² in terms of the peak value of the electric current and 5% of the electric current flowing from the electric source was divided to the auxiliary anode. The quantity of electricity in the nitric acid electrolysis was 175 C/dm² in terms of the quantity of electricity when the aluminum plate functioned as an anode. The plate was then washed with water by spraying.

The plate was then subjected to an electrochemical roughening treatment in the same manner as in the nitric acid electrolysis above using as an electrolytic solution, a 0.5% by weight aqueous hydrochloric acid solution (containing 0.5% by weight of aluminum ion) having temperature of 50°C and under the condition that the quantity of electricity was 50 C/dm² in terms of the quantity of electricity when the aluminum plate functioned as an anode. The plate was then washed with water by spraying.

The plate was then subjected to an anodizing treatment using as an electrolytic solution, a 15% by weight aqueous sulfuric acid solution (containing 0.5% by weight of aluminum ion) at a current density of 15 A/dm² to form a direct current anodized film of 2.5 g/m², washed with water and dried to prepare Support (1).

Thereafter, in order to ensure the hydrophilicity of the non-image area, Support (1) was subjected to silicate treatment using a 2.5% by weight aqueous sodium silicate No. 3 solution at 60°C for 10 seconds and subsequently washed with water to obtain Support (2). The adhesion amount of Si was 10 mg/m². The center line average roughness (Ra) of Support (2) was measured using a stylus having a diameter of 2 µm and found to be 0.51 µm.

### (2) Formation of Undercoat layer

Coating solution (1) for undercoat layer having the composition shown below was coated on Support (2) described above so as to have a dry coating amount of 20 mg/m² to prepare a support having an undercoat layer.

### <Coating solution (1) for undercoat layer>

| | |
|---|---|
| Compound (1) for undercoat layer having structure shown below | 0.18 g |
| Hydroxyethyliminodiacetic acid | 0.10 g |
| Methanol | 55.24 g |
| Water | 6.15 g |

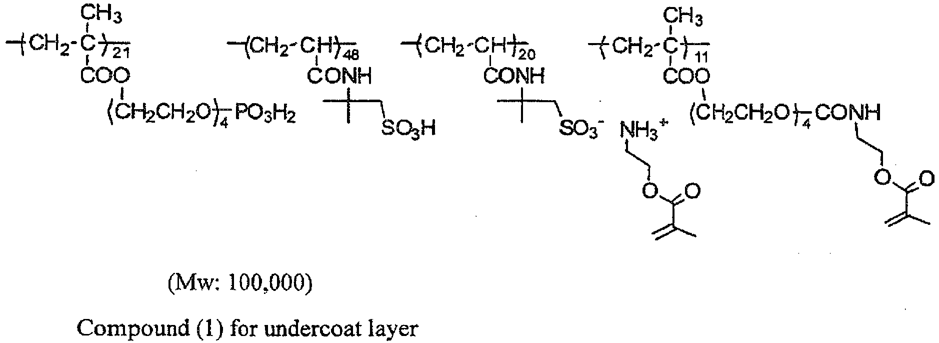

### (3) Formation of Image-recording layer

Coating solution (1) for image-recording layer having the composition shown below was coated on the undercoat layer formed as described above by a bar and dried in an oven at. 100°C for 60 seconds to form an image-recording layer having a dry coating amount of 1.0 g/m².

Coating solution (1) for image-recording layer was prepared by mixing Photosensitive solution (1) shown below with Microgel solution (1) shown below just before the coating, followed by stirring.

### <Photosensitive solution (1)>

| | |
|---|---|
| Polymer compound represented by formula (1) shown in Table 5 | 2.4 g |
| Infrared absorbing dye (1) having structure shown above | 0.030 g |
| Polymerization initiator (1) having structure shown above | 0.162 g |
| Polymerizable compound (Tris(acryloyloxyethyl) isocyanurate (NK Ester A-9300, produced by Shin-Nakamura Chemical Co., Ltd.)) | 0.192 g |
| Hydrophilic low molecular weight compound (Tris(2-hydroxyethyl) isocyanurate) | 0.062 g |
| Hydrophilic low molecular weight compound (1) having structure shown below | 0.050 g |
| Oil-sensitizing agent (Phosphonium compound (1) having structure shown below) | 0.055 g |
| Oil-sensitizing agent (Benzyl dimethyl octyl ammonium PF₆ salt) | 0.018 g |
| Oil-sensitizing agent (Ammonium group-containing polymer having structure shown below (reduced specific viscosity: 44 cSt/g/ml) | 0.035 g |
| Fluorine-based surfactant (1) having structure shown below | 0.008 g |
| 2-Butanone | 1.091 g |
| 1-Methoxy-2-propanol | 8.609 g |

### <Microgel solution (1)>

| | |
|---|---|
| Microgel (1) shown below | 2.640 g |
| Distilled water | 2.425 g |

The structures of Phosphonium compound (1), Hydrophilic low molecular weight compound (1), Oil-sensitizing agent (ammonium group-containing polymer) and Fluorine-based surfactant (1) are shown below.

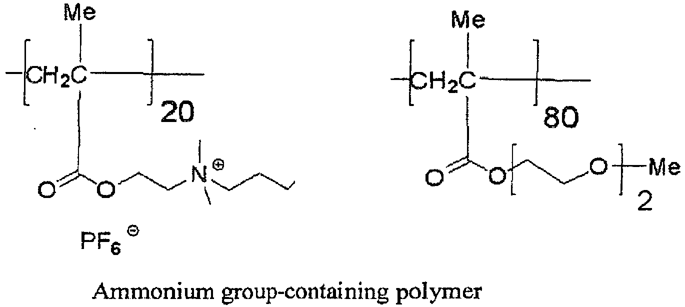

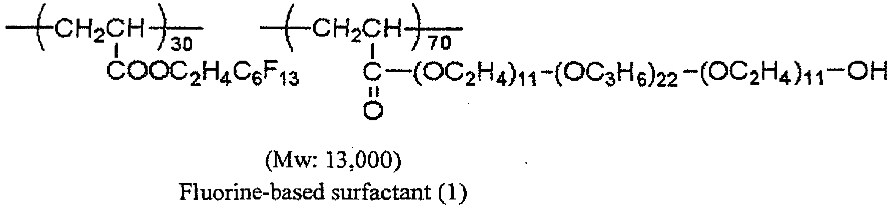

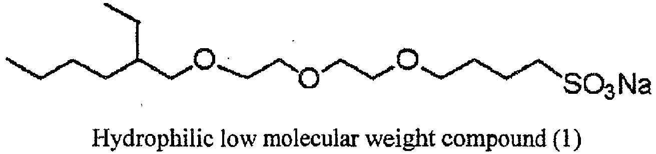

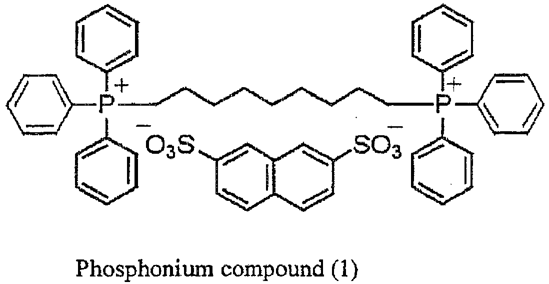

### <Preparation of Microgel (1)>

An oil phase component was prepared by dissolving 10 g of adduct of trimethylol propane and xylene diisocyanate (Takenate D-110N, produced by Mitsui Chemicals Polyurethanes, Inc.), 3.15 g of pentaerythritol triacrylate (SR444, produced by Nippon Kayaku Co., Ltd.) and 0.1 g of Pionin A-41C (produced by Takemoto Oil & Fat Co., Ltd.) in 17 g of ethyl acetate. As an aqueous phase component, 40 g of a 4% by weight aqueous solution of polyvinyl alcohol (PVA-205, produced by Kuraray Co., Ltd.) was prepared. The oil phase component and the aqueous phase component were mixed and emulsified using a homogenizer at 12,000 rpm for 10 minutes. The resulting emulsion was added to 25 g of distilled water and stirred at room temperature for 30 minutes and then at 50°C for 3 hours. The microgel liquid thus-obtained was diluted using distilled water so as to have the solid content concentration of 15% by weight to prepare Microgel (1). The average particle size of the microgel was measured by a light scattering method and found to be 0.2 µm.

### (4) Formation of Protective layer

Coating solution (1) for protective layer having the composition shown below was coated on the image-recording layer described above by a bar and dried in an oven at 120°C for 60 seconds to form a protective layer having a dry coating amount of 0.15 g/m²_{,} thereby preparing Lithographic printing plate precursors (1) to (7) for Examples 3 to 9, respectively.

### <Coating solution (1) for protective layer>

| | |
|---|---|
| Dispersion of inorganic stratiform compound (1) shown below | 1.5 g |
| Aqueous 6% by weight solution of polyvinyl alcohol (CKS 50, sulfonic acid-modified, saponification degree: 99% by mole or more, polymerization degree: 300, produced by Nippon Synthetic Chemical | 0.55 g |
| Industry Co., Ltd.) | |
| Aqueous 6% by weight solution of polyvinyl alcohol (PVA-405, saponification degree: 81.5 % by mole, polymerization degree: 500, produced by Kuraray Co., Ltd.) | 0.03 g |
| Aqueous 1% by weight solution of surfactant (Emalex 710, produced by Nihon Emulsion Co., Ltd.) | 0.86 g |
| Ion-exchanged water | 6.0 g |

### <Preparation of Dispersion of inorganic stratiform compound (1)>

To 193.6 g of ion-exchanged water was added 6.4 g of synthetic mica (Somasif ME-100, produced by CO-OP Chemical Co., Ltd.) and the mixture was dispersed using a homogenizer until an average particle size (according to a laser scattering method) became 3 µm to prepare Dispersion of inorganic stratiform compound (1). The aspect ratio of the inorganic particle thus-dispersed was 100 or more.

### [Preparation of Lithographic printing plate precursor (8)]

Lithographic printing plate precursor (8) for Comparative Example 3 was prepared in the same manner as in Lithographic printing plate precursor (1) expect for changing Polymer compound (A-1) to Straight-chain polymer (R-1) described above. The image-recording layer of Lithographic printing plate precursor (8) had a dry coating amount of 1.0 g/m².

### [Preparation of Lithographic printing plate precursors (9) to (11)]

Lithographic printing plate precursors (9) to (11) for Comparative Examples 4 to 6 were prepared in the same manner as in Lithographic printing plate precursor (1) expect for changing Polymer compound (A-1) to Multi-branched polymers (R-2) to (R-4) shown below. Each of the image-recording layers of Lithographic printing plate precursors (9) to (11) had a dry coating amount of 1.0 g/m².

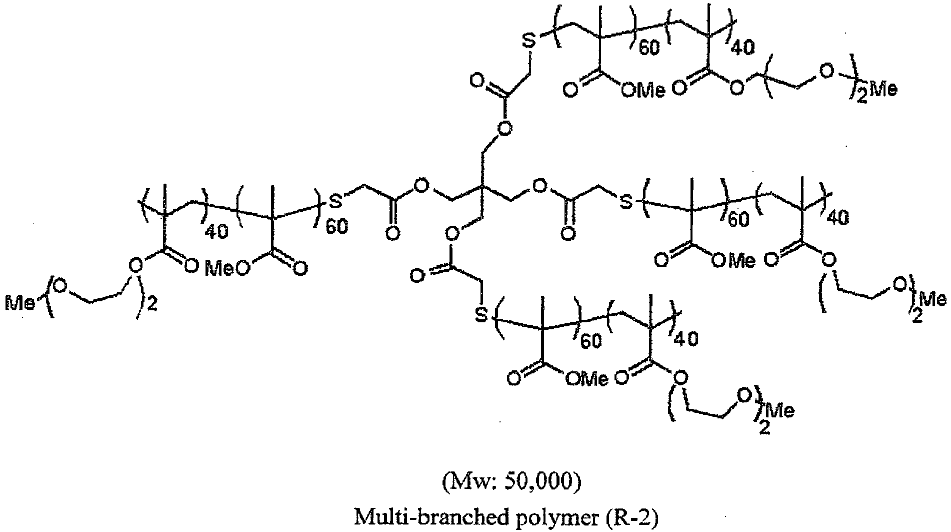

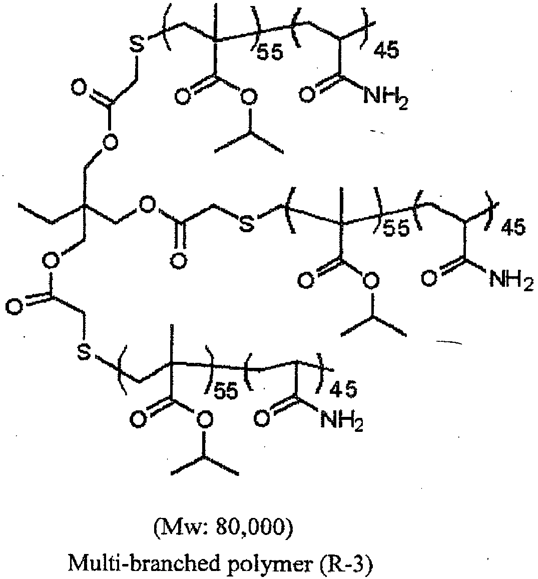

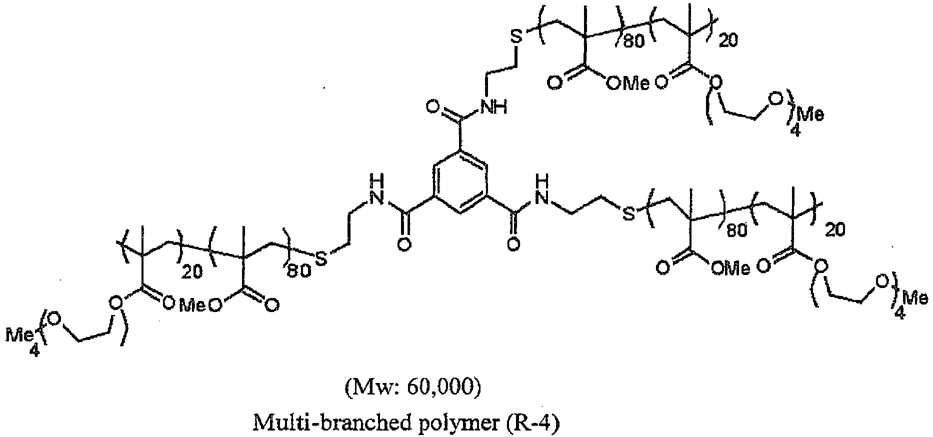

### [Preparation of Lithographic printing plate precursor (12)]

Coating solution (2) for image-recording layer having the composition shown below was coated on the support having the undercoat layer described above by a bar and dried in an oven at 100°C for 60 seconds to form an image-recording layer having a dry coating amount of 1.0 g/m². Coating solution (1) for protective layer described above was coated on the image-recording layer by a bar and dried in an oven at 120°C for 60 seconds to form a protective layer having a dry coating amount of 0.15 g/m², thereby preparing Lithographic printing plate precursor (12) for Example 10.

Coating solution (2) for image-recording layer was prepared by mixing Photosensitive solution (2) shown below with Microgel solution (1) shown below just before the coating, followed by stirring.

### <Photosensitive solution (2)>

| | |
|---|---|
| Polymer compound represented by formula (1) shown in Table 5 | 2.4 g |
| Infrared absorbing dye (1) having structure shown above | 0.030 g |
| Polymerization initiator (1) having structure shown above | 0.162 g |
| Polymerizable compound (1) having structure shown below | 0.192 g |
| Hydrophilic low molecular weight compound (Tris(2-hydroxyethyl) isocyanurate) | 0.062 g |
| Hydrophilic low molecular weight compound (1) having structure shown above | 0.050 g |
| Oil-sensitizing agent (Phosphonium compound (1) having structure shown above) | 0.055 g |
| Oil-sensitizing agent (Benzyl dimethyl octyl ammonium PF₆ salt) | 0.018 g |
| Oii-sensitizing agent (Ammonium group-containing polymer having structure shown above (reduced specific viscosity: 44 cSt/g/ml) | 0.035 g |
| Fluorine-based surfactant (1) having structure shown above | 0.008 g |
| 2-Butanone | 1.091 g |
| 1 -Methoxy-2-propanol | 8.609 g |

### <Microgel solution (1)>

| | |
|---|---|
| Microgel (1) shown above | 2.640 g |
| Distilled water | 2.425 g |

The structure of Polymerizable compound (1) is shown below.

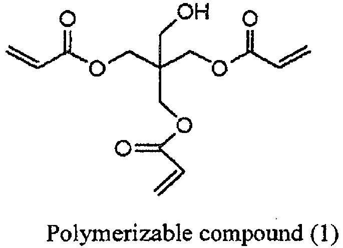

### [Preparation of Lithographic printing plate precursor (13)]

Coating solution (3) for image-recording layer shown below was coated on the support having the undercoat layer described above by a bar and dried in an oven at 70°C for 60 seconds to form an image-recording layer having a dry coating amount of 0.6 g/m², thereby preparing Lithographic printing plate precursor (13) for Example 11.

### <Coating solution (3) for image-recording layer>

| | |
|---|---|
| Aqueous dispersion of fine polymer particle (1) shown below | 20.0 g |
| Infrared absorbing dye (2) having structure shown below | 0.2 g |
| Polymerization initiator (Irgacure 250, produced by Ciba Specialty Chemicals, Inc.) | 0.5 g |
| Polymerizable compound (SR-399, produced by Sartomer Co.) | 1.50 g |
| Mercapto-3-triazole | 0.2 g |
| Polymer compound represented by formula (1) shown in Table 5 | 4.5 g |
| n-Propanol | 55.0 g |
| 2-Butanone | 17.0 g |

The compounds indicated using their trade names in the composition above are shown below.
Irgacure 250: (4-Methoxyphenyl)[4-(2-methylpropyl)phenyl]iodonium hexafluorophosphate (75% by weight propylene carbonate solution)
SR-399: Dipentaerythritol pentaacrylate

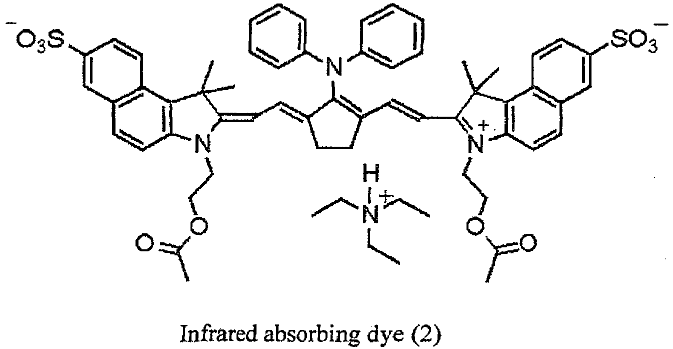

### (Preparation of Aqueous dispersion of fine polymer particle (1))

A stirrer, a thermometer, a dropping funnel, a nitrogen inlet tube and a reflux condenser were attached to a 1,000 ml four-neck flask and while carrying out deoxygenation by introduction of nitrogen gas, 10 g of polyethylene glycol methyl ether methacrylate (PEGMA, average repeating unit number of ethylene glycol: 50), 200 g of distilled water and 200 g of n-propanol were charged therein and heated until the internal temperature reached 70°C. Then, a mixture of 10 g of styrene (St), 80 g of acrylonitrile (AN) and 0.8 g of 2,2'-azobisisobutyronitrile previously prepared was dropwise added to the flask over a period of one hour. After the completion of the dropwise addition, the reaction was continued as it was for 5 hours. Then, 0.4 g of 2,2'-azobisisobutyronitrile was added and the internal temperature was raised to 80°C. Thereafter, 0.5 g of 2,2'-azobisisobutyronitrile was added over a period of 6 hours. At the stage after reacting for 20 hours in total, the polymerization proceeded 98% or more to obtain Aqueous dispersion of fine polymer particle (1) of PEGMA/St/AN (10/10/80 in a weight ratio). The particle size distribution of the fine particle polymer had the maximum value at the particle size of 150 nm.

The particle size distribution was determined by taking an electron microphotograph of the fine polymer particle, measuring particle sizes of 5,000 fine particles in total on the photograph, and dividing a range from the largest value of the particle size measured to 0 on a logarithmic scale into 50 parts to obtain occurrence frequency of each particle size by plotting. With respect to the aspherical particle, a particle size of a spherical particle having a particle area equivalent to the particle area of the aspherical particle on the photograph was defined as the particle size.

### [Preparation of Lithographic printing plate precursors (15) and (16)]

Lithographic printing plate precursors (15) for Example 13 and (16) for Example 14 were prepared in the same manner as the preparation of Lithographic printing plate precursor (1) except for substituting the polymerizable compound of tris(acryloyloxyethyl) isocyanurate in Photosensitive solution (1) with Compound M-16 described hereinbefore and Compound M-20 described hereinbefore, respectively.

### [Evaluation of Lithographic printing plate precursor]

### (1) On-press development property

The lithographic printing plate precursor thus-obtained was exposed by Luxel Platesetter T-6000III equipped with an infrared semiconductor laser produced by FujiFilm Corp. under the conditions of a rotational number of an external drum of 1,000 rpm, laser output of 70% and resolution of 2,400 dpi. The exposed image contained a solid image and a 50% halftone dot chart of a 20 µm-dot FM screen.

The exposed lithographic printing plate precursor was mounted without undergoing development processing on a plate cylinder of a printing machine (Lithrone 26, produced by Komori Corp.). Using dampening water (Ecolity-2 (produced by FujiFilm Corp.)/tap water = 2/98 (volume ratio)) and Values-G (N) Black Ink (produced by Dainippon Ink & Chemicals, Inc.), the dampening water and ink were supplied according to the standard automatic printing start method of Lithrone 26 to conduct printing on 100 sheets of Tokubishi art paper (76.5 kg) at a printing speed of 10,000 sheets per hour.

A number of the printing papers required until the on-press development of the unexposed area of the image-recording layer on the printing machine was completed to reach a state where the ink was not transferred to the printing paper in the non-image area was measured to evaluate the on-press development property. The results obtained are shown in Table 5.

### (2) Printing durability

After performing the evaluation for the on-press development property described above, the printing was continued. As the increase in a number of printing papers, the image-recording layer was gradually abraded to cause decrease in the ink density on a printed material. A number of printed materials wherein a value obtained by measuring a halftone dot area rate of the 50% halftone dot of FM screen on the printed material using a Gretag densitometer decreased by 5% from the value measured on the 100^{th} printed material of the printing was determined to evaluate the printing durability. The results obtained are shown in Table 5.

**TABLE 5: Examples 3 to 11 13 and 14 and Comparative Examples 3 to 6**

| | Lithographic Printing Plate Precursor | Coating Solution for Image-recording Layer | Polymer Compound Represented by Formula (1)* | Coating Solution for Protective Layer | Evaluation Result of Printing | |
|---|---|---|---|---|---|---|
| | | | | | Printing Durability (x 10⁴ sheets) | On-press Development Property (sheets) |
| Example 3 | (1) | (1) | A-1 | (1) | 4 | 13 |
| Example 4 | (2) | (1) | A-2 | (1) | 3.5 | 13 |
| Example 5 | (3) | (1) | A-3 | (1) | 3.5 | 13 |
| Example 6 | (4) | (1) | A-4 | (1) | 3.5 | 13 |
| Example 7 | (5) | (1) | A-5 | (1) | 3.5 | 13 |
| Example 8 | (6) | (1) | A-7 | (1) | 4 | 13 |
| Example 9 | (7) | (1) | A-8 | (1) | 4 | 13 |
| Comparative Example 3 | (8) | (1) | R-1 | (1) | 3 | 20 |
| Comparative Example 4 | (9) | (1) | R-2 | (1) | 3 | 20 |
| Comparative Example 5 | (10) | (1) | R-3 | (1) | 3 | 20 |
| Comparative Example 6 | (11) | (1) | R-4 | (1) | 3 | 20 |
| Example 10 | (12) | (2) | A-1 | (1) | 3.5 | 16 |
| Example 11 | (13) | (3) | A-1 | None | 3.5 | 13 |
| Example 13 | (15) | (1) | A-1 | (1) | 4 | 13 |
| Example 14 | (16) | (1) | A-1 | (1) | 4 | 13 |

| | | | | | | |
|---|---|---|---|---|---|---|
| * Polymer compound represented by formula (1) was used by controlling the solid content concentration to 10% by weight. The solution of the polymer compound (A-1) was adjusted by adding a mixed solvent of 1-methoxy-2-propanol/2-butanone (1/1) to have a solid content concentration of 10%. The polymer compounds (A-2) to (A-8) and (R-1) to (R-4) were adjusted by adding a mixed solvent of 1-methoxy-2-propanol/2-butanone (1/1) to have a solid content concentration of 10%. | | | | | | |

It can be seen from the results shown in Table 5 that in the examples using the branched type polymer having an isocyanuric acid skeleton according to the invention, the developing property and printing durability are improved in comparison with the comparative examples using the straight-chain polymer or the branched type polymer not having an isocyanuric acid skeleton. Further, the developing property and printing durability are more improved by the combination of the branched type polymer having an isocyanuric acid skeleton with the polymer compound having an isocyanuric acid skeleton according to the invention.

### Examples 15 and 16 and Comparative Examples 7 and 8

### [Preparation of Lithographic printing Plate Precursor (17)]

### <Preparation of Support>

An aluminum plate having a thickness of 0.3 mm was immersed in an aqueous 10% by weight sodium hydroxide solution at 60°C for 25 seconds to effect etching, washed with running water, neutralized and cleaned with an aqueous 20% by weight nitric acid solution and then washed with water. The aluminum plate was subjected to an electrolytic surface roughening treatment in an aqueous 1 % by weight nitric acid solution using an alternating current with a sinusoidal waveform at an anode time electricity of 300 coulomb/dm². Subsequently, the aluminum plate was immersed in an aqueous 1% by weight sodium hydroxide solution at 40°C for 5 seconds, immersed in an aqueous 30% by weight sulfuric acid solution at 60°C for 40 seconds to effect a desmut treatment, and then subjected to an anodizing treatment in an aqueous 20% by weight sulfuric acid solution for 2 minutes under condition of current density of 2 A/dm² to form an anodic oxide film having a thickness of 2.7 g/m². The surface roughness of the aluminum plate was measured and found to be 0.28 µm (Ra indication according to JIS B0601). The support thus prepared was referred to as Support A.

### <Preparation of Support B>

Support A was immersed for 10 seconds in a processing solution of 53°C prepared by dissolving 0.4% by weight of polyvinylphosphonic acid (produced by PCAS) in pure water and the excess processing solution was removed by a nip roll. Then, the aluminum plate was washed with well water having a calcium ion concentration of 100 ppm at 60°C for 4 seconds and further with pure water at 25°C for 4 seconds, followed by removing the excess pure water by a nip roll. Thereafter, the water on the aluminum plate was completely removed in the subsequent drying step thereby preparing Support B.

Coating solution (5) for image-recording layer having the composition shown below was coated on Support B so as to have a dry coating amount of 1.4 g/m² and dried at 100°C for one minute to form an image-recording layer for Example 15.

### <Coating solution (5) for image-recording layer>

| | |
|---|---|
| Polymerizable compound (Tris(acryloyloxyethyl) isocyanurate (NK Ester A-9300, produced by Shin-Nakamura Chemical Co., Ltd.)) | 3.33 parts by weight |
| Polymer compound (A-1) (Mw: 44,000) | 26.7 parts by |
| | weight |
| Sensitizing dye (D-1) | 0.32 parts by |
| | weight |
| Polymerization initiator (I-1) | 0.61 parts by |
| | weight |
| Chain transfer agent (S-2) | 0.57 parts by |
| | weight |
| N-Nitrosophenylhydroxylamine aluminum salt | 0.020 part by |
| | weight |
| Dispersion of ε-phthalocyanine pigment | 0.71 parts by weight |
| [pigment: 15% by weight; dispersing agent (allyl methacrylate/methacrylic acid (molar ratio: 80/20) copolymer) (Mw: 60,000): 10% by weight; solvent (cyclohexanone/methoxypropyl acetate/1-methoxy-2-propanol = 15% by weight/20% by weight/40% by weight)] | |
| Fluorine-based nonionic surfactant (Megafac F780F, produced by Dainippon Ink & Chemicals Inc.) | 0.016 part by weight |
| 2-Butanone | 47 parts by weight |
| Propylene glycol monomethyl ether | 45 parts by weight |

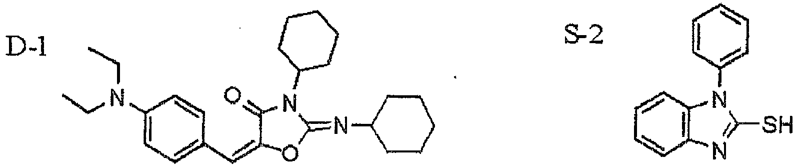

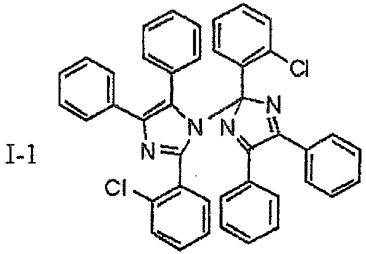

Coating solution (2) for protective layer having the composition shown below was coated on the image-recording layer using a bar so as to have a dry coating amount of 0.50 g/m² and dried at 125°C for 70 seconds to form a protective layer, thereby preparing Lithographic printing plate precursor (17).

### <Coating solution (2) for protective layer>

| | |
|---|---|
| Dispersion of mica shown below | 0.6 g |
| Sulfonic acid-modified polyvinyl alcohol [Goseran CKS-50, produced by Nippon Synthetic Chemical Industry Co., Ltd. (saponification degree: 99% by mole; average polymerization degree: 300; modification degree: about 0.4% by mole)] | 0.8 g |
| Surfactant (Emalex 710, produced by Nihon Emulsion Co., Ltd.) | 0.002 g |
| Water | 13. g |

### (Preparation of dispersion of mica)

In 368 g of water was added 32 g of synthetic mica (SOMASIF ME-100, produced by CO-OP Chemical Co., Ltd., aspect ratio: 1,000 or more) and the mixture was dispersed using a homogenizer until the average particle diameter (measured by a laser scattering method) became 0.5 µm to obtain dispersion of mica.

### [Preparation of Lithographic printing plate precursors (18) and (19)]

Lithographic printing plate precursors (18) and (19) for Comparative examples 7 and 8 were prepared in the same manner as the preparation of Lithographic printing plate precursor (17) except for changing Polymer compound (A-1) to Polymers (R-1) and (R-2), respectively.

### [Preparation of Lithographic printing plate precursor (20)]

Lithographic printing plate precursor (20) for Example 16 was prepared in the same manner as the preparation of Lithographic printing plate precursor (17) except for changing the polymerizable compound of tris(acryloyloxyethyl) isocyanurate in Coating solution (5) for image-recording layer to Polymerizable compound (1) described above.

### (1) Exposure, Development and Printing

Each of the lithographic printing plate precursors was subjected to image exposure by Violet semiconductor laser plate setter Vx9600 (having InGaN semiconductor laser (emission wavelength: 405 nm ± 10 nm/output: 30 mW)) produced by FUJIFILM Electronic Imaging Ltd. (FFEI). The image drawing was performed at resolution of 2,438 dpi using an FM screen (TAFFETA 20, produced by FujiFilm Corp.) in a plate surface exposure amount of 0.05 mJ/cm² so as to have a halftone dot area rate of 50%.

The exposed lithographic printing plate precursor was subjected to preheating at 100°C for 30 seconds and then subjected to development processing in an automatic development processor having a structure as shown in Fig. 1 using a developer having the composition shown below.

The automatic development processor comprises a developing unit 6 for developing a lithographic printing plate precursor (hereinafter, also referred to as a "PS plate") 4 and a drying unit 10 for drying the developed PS plate 4. An insertion slot is formed in a side plate of the automatic development processor (on the left side in Fig. 1) and the PS plate 4 inserted through the insertion slot is transported into the developing unit 6 by carrying-in rollers 16 provided inside the side plate of the automatic development processor. In a developing tank 20 of the developing unit 6, transport rollers 22, a brush roller 24 and squeeze rollers 26 are provided in order from the upstream side in the transporting direction and backup rollers 28 are disposed in appropriate positions therebetween. The PS plate 4 is immersed in the developer while being transported by the transport rollers 22 and the protective layer and the unexposed area of the image-recording layer of PS plate 4 were removed by rotation of the brush roller 24 to conduct development processing. The PS plate 4 subjected to the development processing is transported into the drying unit 10 by the squeeze rollers (carrying-out rollers) 26.

In the drying unit 10, a guide roller 36 and a pair of skewer rollers 38 are disposed in order from the upstream side in the transporting direction. In the drying unit 10, drying means, for example, hot air supply means or heat generating means (not shown) is also provided. A discharge slot is provided in the drying unit 10 and the PS plate 4 dried by the drying means is discharged through the discharge slot, whereby the processing of PS plate by the automatic development processor is completed. The automatic development processor used in the example had one brush roller having an outer diameter of 50 mm and being implanted with fiber of polybutylene terephthalate (bristle diameter: 200 µm, bristle length: 17 mm), and the brush roller was rotated at 200 rpm (peripheral velocity at the tip of brush: 0.52 m/sec) in the same direction as the transporting direction of the lithographic printing plate precursor. The temperature of the developer was 30°C. The transportation of the lithographic printing plate precursor was conducted at transporting speed of 82 cm/min. In case of conducting the evaluation of developing property, the transporting speed was varied. After the development processing, the lithographic printing plate was dried in the drying unit. The drying temperature was 80°C.

Then, the lithographic printing plate obtained was mounted on a printing machine (SOR-M, produced by Heidelberg) and printing was performed to paper named "Shiraoi" (produced by Nippon Paper Industries Co., Ltd.") at a printing speed of 6,000 sheets per hour using dampening water (EU-3 (etching solution, produced by FujiFilm Corp.))/water/isopropyl alcohol = 1/89/10 (by volume ratio)) and TRANS-G (N) Black Ink (produced by Dainippon Ink & Chemicals, Inc.).

### (Developer)

The composition of Developer 1 used in the examples and comparative examples are shown in Table 6. In the developer, Newcol B13 is polyoxyethylene β-naphthyl ether (average number of oxyethylene: n=13, produced by Nippon Nyukazai Co., Ltd.) and gum arabic used has a weight average molecular weight (Mw) of 200,000.

**TABLE 6: Developer 1. (pH: 9.8)**

| | |
|---|---|
| 0.2 M Aqueous boric acid solution | 25.00 parts by weight |
| 0.2 M Aqueous sodium chloride solution | 25.00 parts by weight |
| 0.1 M Aqueous sodium hydroxide solution | 40.60 parts by weight |
| Water | 9.40 parts by weight |
| Newcol B13 (produced by Nippon Nyukazai Co., Ltd.) | 5.00 parts by weight |
| Gum arabic | 2.50 parts by weight |
| Hydroxy-alkylated starch (Penon JE66, produced by Nippon Starch Chemical Co., Ltd.) | 7.00 parts by weight |

### (2) Evaluation

Developing property and printing durability were evaluated in the following manner. The results obtained are shown in Table 7.

### <Developing property>

The development was conducted at various transporting speeds and cyan density of the non-image area was measured by a Macbeth densitometer (produced by Gretag Macbeth Co., Ltd.). The transporting speed at which the cyan density of the non-image area became equivalent to cyan density of the aluminum support was determined and at this transporting speed, a period of time from when the head of lithographic printing plate precursor was immersed in the developer to when it came out from the developer was regard as a developing time to evaluate the developing property.

### <Printing durability>

As the increase in a number of printing papers, the image-recording layer was gradually abraded to cause decrease in the ink density on a printed material. A number of printed materials wherein a value obtained by measuring a halftone dot area rate of the 50% halftone dot of FM screen on the printed material using a Gretag densitometer decreased by 5% from the value measured on the 100^{th} printed material of the printing was determined to evaluate the printing durability. The results obtained are shown in Table 7.

**TABLE 7: Examples 15 and 16 and Comparative Examples 7 and 8**

| | Lithographic Pprinting Plate Precursor | Coating Solution for Image-recording Layer | Polymer Compound Represented by Formula (1) | Coating Solution for Protective Layer | Printing Durability (x 10⁴ sheets) | Developing Time (seconds) |
|---|---|---|---|---|---|---|
| Example 15 | (17) | (5) | A-1 | (2) | 4 | 19 |
| Example 16 | (20) | (5) | A-2 | (2) | 3.5 | 22 |
| Comparative Example 7 | (18) | (5) | R-1 | (2) | 3 | 25 |
| Comparative Example 8 | (19) | (5) | R-2 | (2) | 3 | 25 |

It can be seen from the results shown in Table 7 that in the examples using the branched type polymer having an isocyanuric acid skeleton according to the invention, the developing property and printing durability are improved in comparison with the comparative examples using the straight-chain polymer or the branched type polymer not having an isocyanuric acid skeleton. Further, the developing property and printing durability are more improved by the combination of the branched type polymer having an isocyanuric acid skeleton with the polymer compound having an isocyanuric acid skeleton according to the invention.

## Claims

1. A lithographic printing plate precursor comprising a support and an image-recording layer comprising a polymerizable composition comprising a polymerizable compound, a polymerization initiator and a polymer compound in which polymer chains are branched from an isocyanuric acid skeleton as a branch point.

2. A lithographic printing plate precursor according to Claim 1, wherein the polymer chain comprises a repeating unit having an ethylenically unsaturated group.

3. A lithographic printing plate precursor according to Claim 1 or Claim 2, wherein the polymerizable compound comprises an isocyanuric acid skeleton.

4. A lithographic printing plate precursor according to any preceding claim, wherein the image-recording layer is capable of being removed with at least one of printing ink and dampening water.

5. A lithographic printing method comprising after either mounting the lithographic printing plate precursor as claimed in Claim 4 on a printing machine and exposing imagewise the mounted lithographic printing plate precursor using a laser or exposing imagewise the lithographic printing plate precursor as claimed in Claim 4 using a laser and mounting the exposed lithographic printing plate precursor on a printing machine, supplying at least one of printing ink and dampening water onto the exposed lithographic printing plate precursor to remove an unexposed area of the image-recording layer and conducting printing.

## Patentansprüche

1. Lithographiedruckplattenvorläufer, der einen Träger und eine Bildaufzeichnungsschicht umfasst, die eine polymerisierbare Zusammensetzung umfasst, die eine polymerisierbare Verbindung, einen Polymerisationsinitiator und eine Polymerverbindung umfasst, in der Polymerketten von einem Isocyanursäure-Gerüst als einem Verzweigungspunkt verzweigt sind.

2. Lithographiedruckplattenvorläufer nach Anspruch 1, in dem die Polymerkette eine Repetiereinheit mit einer ethylenisch ungesättigten Gruppe umfasst.

3. Lithographiedruckplattenvorläufer nach Anspruch 1 oder Anspruch 2, in dem die polymerisierbare Verbindung ein Isocyanursäure-Gerüst umfasst.

4. Lithographiedruckplattenvorläufer nach mindestens einem der vorstehenden Ansprüche, in dem die Bildaufzeichnungsschicht mit mindestens einem von Druckfarbe und Feuchtwasser entfernt werden kann.

5. Lithographiedruckverfahren, umfassend:
nach entweder der Montage des Lithographiedruckplattenvorläufers nach Anspruch 4 auf eine Druckmaschine und bildweisen Belichtung des montierten Lithographiedruckplattenvorläufers unter Verwendung eines Lasers oder der bildweisen Belichtung des Lithographiedruckplattenvorläufers nach Anspruch 4 unter Verwendung eines Lasers und Montage des belichteten Lithographiedruckplattenvorläufers auf eine Druckmaschine,
das Zuführen von mindestens einem von Druckfarbe und Feuchtwasser auf den belichteten Lithographiedruckplattenvorläufer, um einen unbelichteten Bereich der Bildaufzeichnungsschicht zu entfernen und
das Durchführen des Druckens.

## Revendications

1. Précurseur de plaque d'impression lithographique comprenant un support et une couche d'enregistrement d'image comprenant une composition polymérisable comprenant un composé polymérisable, un initiateur de polymérisation et un composé polymère où des chaînes polymères sont ramifiées à partir d'un squelette d'acide isocyanurique en tant que point de ramification.

2. Précurseur de plaque d'impression lithographique selon la revendication 1, dans lequel la chaîne polymère comprend une unité de répétition ayant un groupe éthyléniquement insaturé.

3. Précurseur de plaque d'impression lithographique selon la revendication 1 ou 2, dans lequel le composé polymérisable comprend un squelette d'acide isocyanurique.

4. Précurseur de plaque d'impression lithographique selon l'une des revendications précédentes, dans lequel la couche d'enregistrement d'image est capable d'être retirée avec au moins l'une d'une encre d'impression et d'une eau de mouillage.

5. Procédé d'impression lithographique comprenant soit après le montage du précurseur de plaque d'impression lithographique tel que revendiqué dans la revendication 4 sur une machine d'impression et l'exposition selon une image du précurseur de plaque d'impression lithographique monté en utilisant un laser ou l'exposition selon une image du précurseur de plaque d'impression lithographique tel que revendiqué dans la revendication 4 en utilisant un laser et le montage du précurseur de plaque d'impression lithographique exposé sur une machine d'impression, l'alimentation d'au moins l'une d'une encre d'impression et d'une eau de mouillage sur le précurseur de plaque d'impression lithographique exposé pour retirer une zone non exposée de la couche d'enregistrement d'image et la réalisation de l'impression.
